# EUROPÄISCHE PATENTSCHRIFT

(11) **EP 3 237 125 B1**
(45) Veröffentlichungstag und Bekanntmachung des Hinweises auf die Patenterteilung: **06.04.2022**
(21) Anmeldenummer: 15701000.0
(22) Anmeldetag: 20.01.2015
(51) Int. Cl.: B08B 3/02, G05D 16/20

(54) **HOCHDRUCKREINIGUNGSGERÄT**
HIGH-PRESSURE CLEANING DEVICE
APPAREIL DE NETTOYAGE À HAUTE PRESSION

(30) Priorität: 23.12.2014 DE 102014119555
(43) Veröffentlichungstag der Anmeldung: 01.11.2017
(73) Patentinhaber: Alfred Kärcher SE & Co. KG, 71364 Winnenden (DE)
(72) Erfinder: KLÖPFER, Jürgen, 71576 Burgstetten (DE); FISCHER, Markus, 71364 Winnenden (DE); MUNZ, Swen, 73642 Welzheim (DE); SPENGLER, Timo, 71263 Weil der Stadt (DE)
(74) Vertreter: DTS Patent- und Rechtsanwälte Schnekenbühl und Partner mbB
(86) Internationale Anmeldenummer: PCT/EP2015/051035
(87) Internationale Veröffentlichungsnummer: WO 2016/102074

(56) Entgegenhaltungen:
- DE-A1- 2 722 353
- DE-A1- 2 841 018
- DE-A1-102006 009 855
- DE-U1- 9 313 929
- GB-A- 1 304 467
- US-A1- 2013 214 059

## Beschreibung

Die Erfindung betrifft ein Hochdruckreinigungsgerät mit einer Hochdruckpumpe, die einen Saugraum umfasst, mindestens einen diesem nachgelagerten Pumpraum, in dem Flüssigkeit unter Druck gesetzt wird, und einen dem Pumpraum nachgelagerten Druckraum.

Eine Hochdruckpumpe des Hochdruckreinigungsgerätes der eingangs genannten Art ist beispielsweise als Kolbenpumpe ausgestaltet, insbesondere als Axialkolbenpumpe, und umfasst üblicherweise zwei oder mehr hin- und herbewegbare Kolben. Unter Bewegung der Kolben wird aus dem Saugraum eingesaugte Flüssigkeit im Pumpraum unter Druck gesetzt und über den Druckraum von der Hochdruckpumpe abgegeben. Mit dem Saugraum steht eine Saugleitung in Strömungsverbindung, und der Druckraum steht mit einer Hochdruckleitung in Strömungsverbindung, insbesondere einem Hochdruckschlauch, und über diese mit einer Austragsvorrichtung des Hochdruckreinigungsgerätes.

Die DE 28 41 018 A1 beschreibt eine Ventileinrichtung für eine Hochdruckpumpe. Die Ventileinrichtung umfasst ein Überströmventil zwischen der Druckseite und der Saugseite und eine Druck-Mengenreguliervorrichtung. Diese weist ein Druck-Mengenregulierventil in einem Bypass zu einer druckseitigen Rücklaufbohrung auf. Die Eingangsseite des Druck-Mengenregulierventils zweigt von der Rücklaufbohrung ab, die Ausgangsseite mündet über eine Überströmbohrung in einen Ventilraum des Überströmventils. Durch Öffnen der Überströmbohrung werden Druck und Menge des Waschwassers verringert, und bei vollständig geschlossener Überströmbohrung entsprechen der Druck und die Menge des von der Hochdruckpumpe ausgestoßenen Waschmediums der Pumpenleistung.

Aufgabe der vorliegenden Erfindung ist es, ein gattungsgemäßes Hochdruckreinigungsgerät bereitzustellen, das einen zuverlässigeren Betrieb ermöglicht. Diese Aufgabe wird durch ein erfindungsgemäßes Hochdruckreinigungsgerät mit den Merkmalen von Anspruch 1 gelöst.

Bei dem erfindungsgemäßen Hochdruckreinigungsgerät ist die Möglichkeit gegeben, einen Flüssigkeitsdruck druckseitig des Pumpraumes zu regeln. Zu diesem Zweck umfasst die Hochdruckpumpe unter anderem eine Rückführleitung vom Druckraum zum Saugraum, an der die Ventileinheit angeordnet ist oder in welche die Ventileinheit geschaltet ist. Die Steuereinheit kann die Antriebseinheit zur Betätigung der Ventileinheit ansteuern, wodurch die freie Querschnittsfläche der Rückführleitung verändert werden kann. Der Drucksensor führt der Steuereinheit ein Signal zu, das eine Information über den gemessenen Flüssigkeitsdruck druckseitig des Pumpraumes umfasst. Durch Vergleich des gemessenen mit dem vorgegebenen oder vorgebbaren Flüssigkeitsdruck steuert die Steuereinheit die Antriebseinheit zur Veränderung der freien Querschnittsfläche der Rückführleitung an. Flüssigkeit kann abhängig von der Stellung der Ventileinheit und damit verbundener unterschiedlich großer freier Querschnittsfläche vom Druckraum zum Saugraum strömen und zieht eine Änderung des Flüssigkeitsdruckes nach sich, der mit dem Drucksensor druckseitig des Pumpraumes gemessen werden kann. In der Praxis zeigt sich, dass durch die erfindungsgemäße Lösung eine zuverlässige Regelung bei zugleich konstruktiv einfacher Ausgestaltung der Hochdruckpumpe erzielt werden kann.

Unter "Stellung der Ventileinheit" wird vorliegend insbesondere die Stellung eines Ventilkörpers relativ zu einem Ventilsitz der Ventileinheit verstanden, wobei abhängig von der Relativstellung eine unterschiedlich große freie Querschnittsfläche der Rückführleitung freigegeben ist und die Menge der die Rückführleitung durchströmenden Flüssigkeit eingestellt werden kann.

Unter "druckseitig des Pumpraumes" wird vorliegend insbesondere verstanden, dass der Flüssigkeitsdruck am oder in einem Raum oder einer Flüssigkeitsleitung erfassbar ist, der bzw. die einem den Pumraum vom Druckraum trennenden Druckventil nachgeordnet sind. Hierunter kann insbesondere auch eine an den Druckraum angeschlossene oder in diesen mündende Flüssigkeitsleitung verstanden werden.

Günstig ist es, wenn mit dem Drucksensor der Flüssigkeitsdruck in der Hochdruckpumpe erfassbar ist.

Vorzugsweise ist mit dem Drucksensor ein Flüssigkeitsdruck am oder im Druckraum erfassbar. Beispielsweise ist der Drucksensor zu diesem Zweck am Druckraum angeordnet oder an einer in diesen mündenden Flüssigkeitsleitung.

Bei dem mit dem Drucksensor erfassbaren Flüssigkeitsdruck kann es sich beispielsweise um den Pumpendruck der Flüssigkeit handeln, wie er an einem Pumpenausgang der Hochdruckpumpe vorliegt, an welchen Ausgang die Hochdruckleitung angeschlossen oder anschließbar ist. Der Flüssigkeitsdruck kann auch ein mit dem Pumpendruck gekoppelter Druck sein, so dass dieser über eine bekannte Beziehung des Flüssigkeitsdruckes mit dem Pumpendruck durch eine Messung des Flüssigkeitsdruckes ermittelt werden kann.

Der Pumpenausgang ist beispielsweise am Druckraum angeordnet oder steht mit diesem in Strömungsverbindung.

Der Flüssigkeitsdruck ist der Steuereinheit beispielsweise über eine Eingabeeinheit des Hochdruckreinigungsgerätes vorgebbar. Dabei kann vorgesehen sein, dass der Flüssigkeitsdruck als Absolutwert und/oder als Relativwert, insbesondere über eine Druckstufe, vorgegeben werden kann.

Vorzugsweise ist der Flüssigkeitsdruck der Steuereinheit stufenweise vorgebbar, zum Beispiel über die vorstehend erwähnte Druckstufe.

Alternativ oder ergänzend kann vorgesehen sein, dass der Flüssigkeitsdruck der Steuereinheit kontinuierlich vorgebbar ist.

Die freie Querschnittsfläche der Rückführleitung ist zum Regeln des Flüssigkeitsdruckes bevorzugt stufenweise veränderbar. Beispielsweise kann vorgesehen sein, dass die Ventileinheit diskrete Stellungen einnehmen kann. Alternativ oder ergänzend ist es günstig, wenn die freie Querschnittsfläche der Rückführleitung zum Regeln des Flüssigkeitsdruckes kontinuierlich veränderbar ist. Die Ventilstellung der Ventileinheit kann zum Beispiel kontinuierlich verändert werden.

Vorzugsweise umfasst die Ventileinheit einen Ventilkörper, mit dem die Antriebseinheit gekoppelt ist, und einen Ventilsitz, an dem der Ventilkörper in einer Schließstellung dichtend oder im Wesentlichen dichtend anliegt und von dem der Ventilkörper in mindestens eine Offenstellung zur Änderung der freien Querschnittsfläche der Rückführleitung anhebbar ist. In der Schließstellung ist die Rückführleitung zum Beispiel verschlossen und der Pumpendruck maximal. Durch Anheben des Ventilkörpers vom Ventilsitz kann die freie Querschnittsfläche der Rückführleitung vergrößert, die Menge der die Rückführleitung durchströmenden Flüssigkeit vergrößert und der Pumpendruck verringert werden.

Es kann vorgesehen sein, dass der Ventilkörper entgegen der Wirkung eines elastischen Rückstellelementes von der Schließstellung in die mindestens eine Offenstellung überführbar ist. Das Rückstellelement ist zum Beispiel eine Druckfeder, die den Ventilkörper in Richtung auf die Schließstellung mit einer Schließkraft beaufschlagt.

Als vorteilhaft erweist es sich, wenn in der mindestens einen Offenstellung die Änderung der freien Querschnittsfläche am Ventilsitz pro Verstellweg des Ventilkörpers relativ zum Ventilsitz abhängig ist von der Position des Ventilkörpers relativ zum Ventilsitz. Dadurch lässt sich insbesondere eine nicht-konstante Kennlinie der Ventileinheit umsetzen. Je nachdem, welche Relativstellung der Ventilkörper und der Ventilsitz einnehmen, wird die freie Querschnittsfläche pro Verstellweg in größerem oder weniger großem Ausmaß verändert. Dies ist zum Beispiel günstig, um unterschiedliche Charakteristika der Ventileinheit für unterschiedliche Einsatzzwecke der Hochdruckpumpe bereitzustellen. Beispielsweise kann vorgesehen sein, dass sich die freie Querschnittsfläche im Bereich einer Stellung der Ventileinheit nur in geringem Umfang ändert, wenn der Ventilkörper relativ zum Ventilsitz bewegt wird. Dies kann zur Regelung unterschiedlicher vorgebbarer Flüssigkeitsdrücke vorgesehen sein. In einem andersartigen Bereich der Relativstellung von Ventilkörper und Ventilsitz kann vorgesehen sein, dass sich bei der Relativbewegung eine größere Änderung der Querschnittsfläche ergibt. Dies kann zu einer größeren Änderung des Volumenstroms durch die Rückführleitung eingesetzt werden und mit einem Betriebsmodus der Hochdruckpumpe verknüpft sein, in dem der Flüssigkeitsdruck nicht mehr geregelt wird, über die Änderung des Volumenstroms jedoch eine Konzentration einer der Flüssigkeit beimischbaren Reinigungschemikalie am Pumpenausgang verändert wird. Darauf wird nachfolgend noch eingegangen.

Die Änderung der freien Querschnittsfläche kann beispielsweise mit zunehmendem Abstand eines Ventilkörperdichtabschnittes des Ventilkörpers vom Ventilsitz zunehmen, welcher Ventilkörperdichtabschnitt in der Schließstellung des Ventilkörpers am Ventilsitz anliegt.

Als günstig erweist es sich, wenn die Rückführleitung strömungsabwärts des Ventilsitzes quer zur Längsrichtung des Ventilkörpers ausgerichtet ist. Beispielsweise strömt Flüssigkeit durch die Rückführleitung am Ventilsitz axial zu und diesem nachgelagert radial ab. Der Ventilkörper ist in diesem Fall zum Beispiel in eine von einem Ventilkörperaufnahmeteil gebildete Passung der Ventileinheit eingesetzt. Durch Vorsehen der Strömungsumlenkung von axialer in radiale Strömung kann eine feine Verstellung der freien Querschnittsfläche umgesetzt werden, was der Regelung des Flüssigkeitsdruckes, auch unterschiedlicher Flüssigkeitsdrücke, zugutekommt.

Der Ventilkörper ist bei einer vorteilhaften Ausführungsform als Ventilstift ausgebildet, der in Längsrichtung in der Rückführleitung bewegbar und insbesondere verschiebbar ist.

Günstig ist es, wenn der Ventilstift, zumindest abschnittsweise und insbesondere in Gegenrichtung einer Richtung zur Überführung von der Schließstellung in die mindestens eine Offenstellung eine Verjüngung aufweist. Beispielsweise ist eine, zumindest abschnittsweise, konische Verjüngung vorgesehen.

Es kann vorgesehen sein, dass die Verjüngung zunimmt mit zunehmendem Abstand von einem in der Schließstellung am Ventilsitz anliegenden Ventilkörperdichtabschnitt des Ventilstiftes. Der Ventilstift weist angrenzend an den Ventilkörperdichtabschnitt zum Beispiel eine zylindrische oder im Wesentlichen zylindrische Kontur auf. Alternativ oder ergänzend, zum Beispiel in größerem Abstand vom Ventilkörperdichtabschnitt, kann am Ventilkörper eine Verjüngung vorgesehen sein. Mit zunehmendem Abstand kann die Verjüngung zunehmen. Darunter kann insbesondere verstanden werden, dass eine Änderung der Querschnittsfläche des Ventilkörpers pro Abstandsintervall vom Ventilkörperdichtabschnitt zunimmt. Bei einer Bewegung des Ventilstiftes relativ zum Ventilsitz kann dadurch die Änderung der freien Querschnittsfläche pro Verstellweg mit zunehmendem Abstand des Ventilkörperdichtabschnittes vom Ventilsitz zunehmen.

Die Antriebseinheit ist beispielsweise an der Hochdruckpumpe angeordnet. Es kann vorgesehen sein, dass die Antriebseinheit in einen in der Hochdruckpumpe gebildeten Ventilraum eingreift, in den die Ventileinheit eingesetzt ist. Die Antriebseinheit kann die Ventileinheit im Ventilraum abstützen und insbesondere dichtend an dieser anliegen, wodurch die Rückführleitung abgedichtet werden kann.

Die Antriebseinheit kann auf vielfältige Weise ausgestaltet sein. Beispielsweise ist die Antriebseinheit eine elektrische, mechanische, hydraulische und/oder pneumatische Antriebseinheit.

Bei einer vorteilhaften Umsetzung der Hochdruckpumpe umfasst die Antriebseinheit einen Spindelantrieb. Unter Ansteuerung durch die Steuereinheit kann der elektrische Spindelantrieb betätigt und dadurch die Stellung der Ventileinheit verändert werden. Insbesondere wird der Ventilkörper relativ zum Ventilsitz verschoben. Zu diesem Zweck ist der Ventilkörper, insbesondere als Ventilstift ausgestaltet, beispielsweise fest mit dem Spindelantrieb gekoppelt.

Von Vorteil ist es, wenn die Hochdruckpumpe strömungsabwärts der Ventileinheit an oder in der Rückführleitung ein Druckventil aufweist, das die Rückführleitung bei Überschreiten eines Schwellenwertdruckes freigibt und unterhalb des Schwellenwertdruckes dichtend oder im Wesentlichen dichtend verschließt. Über das Druckventil kann der Flüssigkeitsdruck in der Rückführleitung gehalten werden und die Rückführleitung erst freigegeben werden, wenn der Schwellenwertdruck überschritten ist. Durch das Druckventil kann beispielsweise vermieden werden, dass bei Inbetriebnahme der Hochdruckpumpe im Saugbetrieb Luft aus der Rückführleitung angesaugt wird, wenn der Ventilkörper eine Offenstellung einnimmt.

Bevorzugt weist die Ventileinheit ein die Rückführleitung teilweise ausbildendes Ventilkörperaufnahmeteil auf und einen darin aufgenommenen Ventilkörper, und das Druckventil ist günstigerweise als das Ventilkörperaufnahmeteil umgebender Ventilring ausgestaltet. Das Ventilkörperaufnahmeteil ist beispielsweise in eine Bohrung eines Grundkörpers der Hochdruckpumpe eingesetzt und nimmt den Ventilkörper auf. Das Ventilkörperaufnahmeteil kann eine Austrittsöffnung aufweisen, die von dem es umgebenden Ventilring dichtend oder im Wesentlichen dichtend verschließbar ist. Der Ventilring ist zum Beispiel als O-Ring ausgestaltet.

Von Vorteil ist es, wenn die Hochdruckpumpe einen im Druckraum angeordneten Injektor umfasst und eine in diesen mündende Zuführleitung für eine der Flüssigkeit beizumischende Reinigungschemikalie, und wenn mit dem Drucksensor der Druck in der Zuführleitung erfassbar ist. Der unter Druck gesetzten Flüssigkeit kann eine Reinigungschemikalie zugesetzt werden. Zu diesem Zweck kann im Druckraum der Injektor vorhanden sein, insbesondere ein Venturi-Injektor. Die Reinigungschemikalie kann aus einem Behälter, der in eine Aufnahme des Hochdruckreinigungsgerätes eingesetzt sein kann, dem Injektor über die Zuführleitung zugeführt und mit der unter Druck gesetzten Flüssigkeit vermischt werden. Das Gemisch aus Flüssigkeit und Reinigungschemikalie kann am Pumpenausgang abgegeben werden. Bei der vorliegenden Ausführungsform ist mit dem Drucksensor der Flüssigkeitsdruck in der Zuführleitung ermittelbar, und der Drucksensor ist bevorzugt an der Zuführleitung angeordnet. Anhand des Druckes in der Zuführleitung kann beispielsweise auf den Druck im Druckraum und/oder den Pumpendruck am Ausgang der Hochdruckpumpe geschlossen werden. Über eine Regelung des Flüssigkeitsdruckes in der Zuführleitung kann dadurch auch der Druck im Druckraum und/oder der Pumpendruck am Pumpenausgang geregelt werden.

Die Rückführleitung und/oder die Zuführleitung kann/können auch als Rückführkanal bzw. als Zuführkanal bezeichnet werden.

Günstigerweise ist mit dem Drucksensor ein Flüssigkeitsdruck unterhalb eines vorgegebenen oder vorgebbaren Schwellenwertdruckes erfassbar. Ein Druckabfall ist zum Beispiel dadurch bedingt, dass der Querschnitt einer Austragsvorrichtung des Hochdruckreinigungsgerätes verändert wird, worauf nachfolgend noch eingegangen wird. Beispielsweise fällt der Flüssigkeitsdruck druckseitig des Pumpraumes bei Anschluss und Betrieb einer Niederdruck-Reinigungsmitteldüse ab, was vom Drucksensor erfasst werden kann. Der Abfall kann von der Steuereinheit dahingehend interpretiert werden, dass die Hochdruckpumpe einen Reinigungsmittelmodus einnimmt, in dem die Reinigungschemikalie über den Injektor angesaugt werden kann. Dabei ist der Druck in der Zuführleitung beispielsweise geringer als der Umgebungsdruck der Atmosphäre (ungefähr kleiner als 1 bar).

Die Hochdruckpumpe wird, bei einem Flüssigkeitsdruck unterhalb des vorgegebenen oder vorgebbaren Schwellenwertdruckes, bevorzugt von einem Regelungsmodus, in dem die Reglung des Flüssigkeitsdruckes erfolgt, in einen Nichtregelungsmodus, in dem keine Regelung des Flüssigkeitsdruckes erfolgt, überführt. Im Regelungsmodus wird der Druck wie vorstehend erläutert geregelt. Der Regelungsmodus wird insbesondere eingenommen, wenn eine Austragseinheit in Gestalt einer Hochdruckdüse vorgesehen ist und der Flüssigkeitsdruck abhängig von der Vorgabe eines Benutzers zu regeln ist. Der Regelungsmodus kann daher auch insbesondere als Hochdruckmodus angesehen werden. Im Hochdruckmodus übersteigt der Flüssigkeitsdruck insbesondere einen Schwellenwertdruck. Im Nichtregelungsmodus kann die Hochdruckpumpe den Reinigungsmittelmodus einnehmen, in dem der Flüssigkeitsdruck nicht geregelt wird.

Von Vorteil ist es, wenn eine Stellung der Ventileinheit von der Steuereinheit zur Veränderung der freien Querschnittsfläche im Nichtregelungsmodus abhängig von einer der Steuereinheit zugeführten Vorgabe steuerbar ist. Im Nichtregelungsmodus oder Reinigungsmittelmodus kann insbesondere die Stellung der Ventileinheit vorgegeben und dadurch die freie Querschnittsfläche der Rückführleitung gesteuert werden. Damit ist eine Änderung des Volumenstroms durch die Rückführleitung verbunden. Die Änderung des Volumenstroms hat zur Folge, dass die Konzentration der Reinigungschemikalie, die über den Injektor im Reinigungsmittelmodus angesaugt wird, verändert werden kann. Das Mischverhältnis von Flüssigkeit und Reinigungschemikalie kann dadurch variiert werden.

Die Ventileinheit ist bevorzugt stufenweise verstellbar.

Alternativ oder ergänzend kann vorgesehen sein, dass die Ventileinheit kontinuierlich verstellbar ist.

Vorzugsweise weist das Hochdruckreinigungsgerät, insbesondere die Hochdruckpumpe, ein Dosierventil auf, mit dem die Dosierung der Reinigungschemikalie und damit das Mischverhältnis mit der Flüssigkeit beeinflusst werden kann. Das Dosierventil ist beispielsweise mit der Steuereinheit gekoppelt und/oder abhängig von einer Vorgabe einer Bedienperson an einer Eingabeeinheit betätigbar. Bevorzugt ist das Dosierventil in die vorstehend erwähnte Zuführleitung geschaltet.

Das Hochdruckreinigungsgerät umfasst vorzugsweise eine mit der Steuereinheit gekoppelte Eingabeeinheit, über die der Steuereinheit von einer Bedienperson ein Flüssigkeitsdruck vorgebbar ist. Der Flüssigkeitsdruck kann mit der Hochdruckpumpe geregelt werden. Die Eingabeeinheit umfasst insbesondere Eingabeelemente, zum Beispiel Taster, Tasten, Schalter, Drehschalter oder dergleichen, die von der Bedienperson zur Vorgabe des Flüssigkeitsdrucks betätigt werden können. Beispielsweise sind Taster "+" und "-" vorgesehen, über die die Bedienperson den Flüssigkeitsdruck stufenweise steigern bzw. senken kann.

Das Hochdruckreinigungsgerät umfasst bevorzugt eine Anzeigeeinheit, an der der Bedienperson eine dem vorgegebenen Flüssigkeitsdruck zugeordnete Information anzeigbar ist. Beispielsweise zeigt die Anzeigeeinheit an, welche Druckstufe die Bedienperson ausgewählt hat. Denkbar ist auch, dass der tatsächliche Pumpendruck angezeigt wird, der sich anhand des vorgegebenen Flüssigkeitsdruckes ergibt. Wie bereits erwähnt kann der Pumpendruck vom Flüssigkeitsdruck unterschiedlich sein, mit diesem jedoch in einer derartigen Beziehung stehen, dass von der Steuereinheit der Pumpendruck anhand des Flüssigkeitsdruckes ermittelt werden kann.

Die Eingabeeinheit und die Anzeigeeinheit können bei einer bevorzugten Ausführungsform eine integrierte Eingabe-/Anzeigeeinheit bilden oder als solche ausgestaltet sein, insbesondere als Touchscreen.

Informationen von der Eingabeeinheit an die Steuereinheit und/oder von der Steuereinheit an die Anzeigeeinheit sind vorzugsweise kabellos übertragbar. Beispielsweise ist eine Funkverbindung zur Übertragung der Informationen vorgesehen.

Das Hochdruckreinigungsgerät umfasst vorteilhafterweise eine Beimischeinrichtung zum Beimischen einer Reinigungschemikalie, welche Beimischeinrichtung eine Aufnahme für einen Behälter mit der Reinigungschemikalie aufweist, einen im Druckraum angeordneten Injektor und eine Zuführleitung von der Aufnahme zum Injektor. Die Reinigungschemikalie kann über die Zuführleitung vom Injektor angesaugt und dort mit der unter Druck gesetzten Flüssigkeit gemischt werden. Mit dem Drucksensor ist bevorzugt der Flüssigkeitsdruck in der Zuführleitung erfassbar.

Von Vorteil ist es, wenn das Hochdruckreinigungsgerät eine Bedieneinheit umfasst, die über eine Hochdruckleitung mit dem Druckraum in Strömungsverbindung steht oder bringbar ist, zum Beispiel über einen Pumpenausgang, und an die mindestens eine Austragseinheit für unter Druck gesetzte Flüssigkeit anschließbar ist oder an dieser angeordnet ist und wenn die Bedieneinheit die Eingabeeinheit und/oder die Anzeigeeinheit umfasst. Die Bedieneinheit ist beispielsweise eine Hochdruck-Pistole, die über eine Schlauchleitung an einen Pumpenausgang und über diesen an den Druckraum angeschlossen ist. Über die Eingabeeinheit kann die Bedienperson den Flüssigkeitsdruck benutzerfreundlich vorgeben, wobei Informationen vorzugsweise kabellos an die Steuereinheit übertragen werden können.

Günstig ist es, wenn als erste Austragseinheit eine Hochdruckdüse vorgesehen ist und als zweite Austragseinheit eine Niederdruck-Reinigungsmitteldüse, die wahlweise an die Bedieneinheit anschließbar sind und/oder wenn das Hochdruckreinigungsgerät eine Austragsvorrichtung aufweist, die an der Bedieneinheit angeordnet oder an diese anschließbar ist und die eine Hochdruckdüse und eine Niederdruck-Reinigungsmitteldüse aufweist, die wahlweise mit der Hochdruckleitung in Fluidverbindung bringbar sind. Bei Anschluss oder Auswahl der Hochdruckdüse kann das Hochdruckreinigungsgerät, insbesondere die Hochdruckpumpe, einen Hochdruckmodus oder Regelungsmodus einnehmen, in dem der Flüssigkeitsdruck regelbar ist. Bein Anschluss oder Auswahl der Niederdruck-Reinigungsmitteldüse kann das Hochdruckreinigungsgerät, insbesondere die Hochdruckpumpe, einen Reinigungsmittelmodus oder Nichtregelungsmodus einnehmen, in dem der Flüssigkeitsdruck nicht geregelt wird. Zur Ausübung des Reinigungsmittelmodus weist das Hochdruckreinigungsgerät insbesondere die vorstehend erwähnte Beimischeinrichtung auf.

Von Vorteil ist es, wenn bei Anschluss oder Auswahl der Niederdruck-Reinigungsmitteldüse im Betrieb des Hochdruckreinigungsgerätes, zum Beispiel bei betätigter Bedieneinheit, ein Abfall des Flüssigkeitsdruckes unter einen vorgegebenen oder vorgebbaren Schwellenwertdruck erfassbar ist und wenn der Bedienperson an einer Hinweiseinheit des Hochdruckreinigungsgerätes ein diesbezüglicher Hinweis bereitstellbar ist.

Der Hinweis weist vorzugsweise die Information auf, dass das Hochdruckreinigungsgerät, insbesondere die Hochdruckpumpe, einen Reinigungsmittelmodus einnimmt. Beispielsweise wird ein Symbol einer Reinigungsmitteldüse angezeigt.

Im Reinigungsmittelmodus nimmt die Hochdruckpumpe bevorzugt einen Nichtregelungsmodus ein, in dem keine Regelung des Flüssigkeitsdruckes erfolgt.

Von Vorteil ist es, wenn im Reinigungsmittelmodus von der Bedienperson über die Eingabeeinheit eine Stellung der Ventileinheit zur Veränderung der freien Querschnittsfläche steuerbar ist, insbesondere dass das Hochdruckreinigungsgerät eine Beimischeinrichtung umfasst zum Beimischen einer Reinigungschemikalie, deren Mischverhältnis mit der unter Druck gesetzten Flüssigkeit abhängig von der Stellung der Ventileinheit steuerbar ist. Über die Eingabeeinheit kann die Bedienperson das Mischverhältnis oder die Konzentration der Reinigungschemikalie steuern. Beispielsweise kann die Bedienperson stufenweise die Stellung der Ventileinheit und die damit verbundene Änderung der freien Querschnittsfläche steuern. Der sich dadurch ergebende geänderte Volumenstrom der Flüssigkeit durch die Rückführleitung führt zu einem geänderten Mischverhältnis der Flüssigkeit im Druckraum mit der Reinigungschemikalie.

Vorzugsweise sind Stellungen der Ventileinheit, und damit das Mischverhältnis, stufenweise steuerbar.

Alternativ oder ergänzend kann vorgesehen sein, dass Stellungen der Ventileinheit, und damit das Mischverhältnis kontinuierlich steuerbar sind.

Die Hinweiseinheit ist vorzugsweise die Anzeigeeinheit, an der der Bedienperson eine der vorgegebenen Stellung der Ventileinheit zugeordnete Information anzeigbar ist. Insbesondere ist eine Anzeigeeinheit vorgesehen, an der im Hochdruckmodus eine dem vorgegebenen Flüssigkeitsdruck zugeordnete Information angezeigt wird und im Reinigungsmittelmodus eine dem Mischverhältnis aus Flüssigkeit und Reinigungschemikalie zugeordnete Information anzeigbar ist. Es können zum Beispiel auch Symbole einer Hochdruckdüse bzw. einer Niederdruck-Reinigungsmitteldüse angezeigt werden. Abhängig vom Vorliegen des Hochdruckmodus oder des Reinigungsmittelmodus kann der Bildinhalt der Anzeige von der Steuereinheit verändert werden.

Die Bedieneinheit umfasst vorteilhafterweise Eingabeelemente, mit denen bei Vorliegen des Reinigungsmittelmodus die Stellung der Ventileinheit vorgebbar ist und in Abwesenheit des Reinigungsmittelmodus der Flüssigkeitsdruck vorgebbar ist. Dadurch können dieselben Eingabeelemente zum Vorgeben des Flüssigkeitsdruckes, z. B. im Hochdruckmodus einerseits und zum Vorgeben des Mischverhältnisses von Flüssigkeit und Reinigungschemikalie andererseits eingesetzt werden. Gesonderte Eingabeelemente sind nicht erforderlich.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine perspektivische Darstellung eines erfindungsgemäßen Hochdruckreinigungsgerätes, umfassend eine Hochdruckpumpe;
- Figur 2:: eine Anzeigeeinheit und eine Eingabeeinheit einer Bedieneinheit des Hochdruckreinigungsgerätes aus Figur 1;
- Figur 3:: die Anzeigeeinheit und die Eingabeeinheit, wenn das Hochdruckreinigungsgerät einen Hochdruckmodus einnimmt, sechs unterschiedliche Druckstufen symbolisierend;
- Figur 4:: die Anzeigeeinheit und die Eingabeeinheit, wenn das Hochdruckreinigungsgerät einen Reinigungsmittelmodus einnimmt, drei unterschiedliche Dosierungen einer Reinigungschemikalie symbolisierend;

- Figur 5:: eine Draufsicht auf die Hochdruckpumpe des Hochdruckreinigungsgerätes aus Figur 1;
- Figur 6:: eine Seitenansicht der Hochdruckpumpe;
- Figur 7:: eine Schnittansicht (teilweise) längs der Linie 7-7 in Figur 5;
- Figur 8:: eine Schnittansicht (teilweise) längs der Linie 8-8 in Figur 6;
- Figur 9:: eine Schnittansicht (teilweise) längs der Linie 9-9 in Figur 5, wobei eine Ventileinheit der Hochdruckpumpe eine Schließstellung einnimmt;
- Figur 10:: eine Darstellung entsprechend Figur 9, wobei die Ventileinheit eine Offenstellung einnimmt und ferner eine Antriebseinrichtung dargestellt ist, die der Ventileinheit zugeordnet ist;
- Figur 11:: eine vergrößerte Darstellung von Detail A in Figur 9 und
- Figur 12:: eine vergrößerte Darstellung von Detail B in Figur 10.

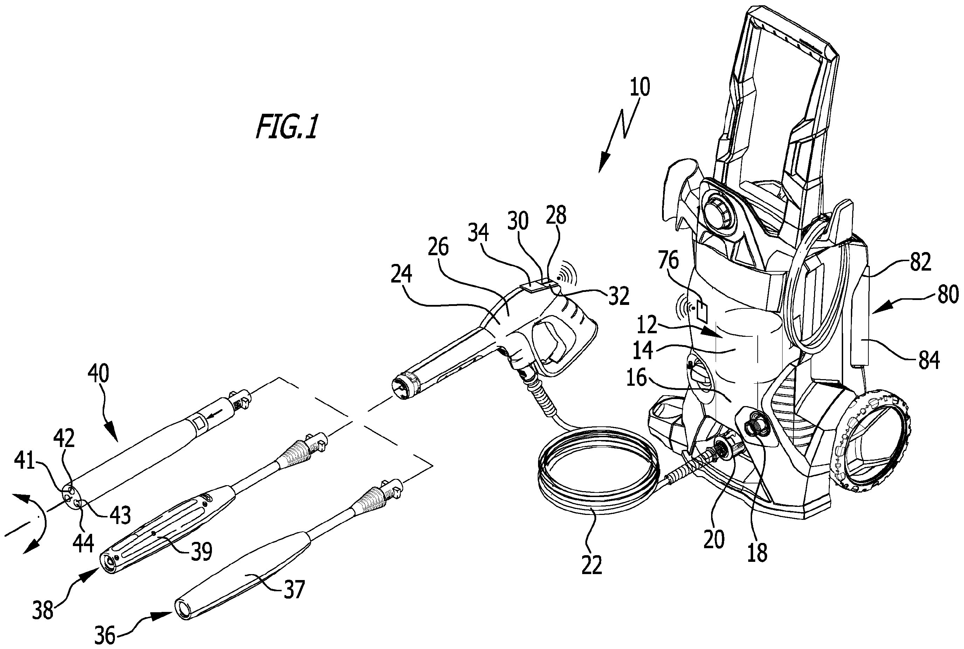

Figur 1 zeigt in perspektivischer Darstellung eine mit dem Bezugszeichen 10 belegte vorteilhafte Ausführungsform eines erfindungsgemäßen Hochdruckreinigungsgerätes. Das Hochdruckreinigungsgerät 10 umfasst eine nur schematisch dargestellte Motorpumpeneinheit 12, die einen Antriebsmotor 14 und eine Hochdruckpumpe 16 umfasst. Beispielsweise ist die Hochdruckpumpe 16 an den Antriebsmotor 14 angeflanscht.

Die Hochdruckpumpe 16 weist einen Pumpeneingang 18 auf, an den eine Zuführleitung für unter Druck zu setzende Flüssigkeit, insbesondere Wasser, anschließbar ist. Ferner weist die Hochdruckpumpe 16 einen Pumpenausgang 20 auf, an den eine Hochdruckleitung 22, vorliegend ein Hochdruckschlauch, für unter Druck gesetzte Flüssigkeit anschließbar ist.

An die Hochdruckleitung 22 ist eine Bedieneinheit 24 des Hochdruckreinigungsgerätes 10 angeschlossen, ausgestaltet als Hochdruck-Pistole 26.

An der Hochdruck-Pistole 26 ist eine Eingabeeinheit 28 angeordnet, die Eingabeelemente zur Betätigung durch eine Bedienperson umfasst. Die Eingabeelemente weisen insbesondere eine Taste "+" 30 und eine Taste "-" 32 auf. Die Hochdruck-Pistole 26 weist ferner eine Anzeigeeinheit 34 auf. Die Anzeigeeinheit 34 ist beispielsweise der Eingabeeinheit 28 benachbart. Die Eingabeeinheit 28 und die Anzeigeeinheit 34 könnten auch ineinander integriert sein und beispielsweise als Touchscreen ausgestaltet sein. Die Anzeigeeinheit 34 umfasst eine optische Bildanzeige und bildet eine Hinweiseinheit des Hochdruckreinigungsgerätes 10. Hinweise können an der Anzeigeeinheit 34 optisch dargestellt werden.

Das Hochdruckreinigungsgerät 10 weist eine Austragseinheit 36 in Gestalt einer Niederdruck-Reinigungsmitteldüse 37 auf. Ferner umfasst das Hochdruckreinigungsgerät 10 eine Austragseinheit 38 in Gestalt einer Hochdruckdüse 39. Alternativ oder ergänzend kann das Hochdruckreinigungsgerät 10 ferner eine Austragsvorrichtung 40 aufweisen, die eine Mehrzahl von Austragseinheiten umfasst. Insbesondere ist eine Austragseinheit 41 vorgesehen, ausgestaltet als Niederdruck-Reinigungsmitteldüse 42, und eine Austragseinheit 43, ausgestaltet als Hochdruckdüse 44.

Wahlweise kann die Bedienperson die Austragseinheit 36, die Austragseinheit 38 oder die Austragsvorrichtung 40 an die Hochdruck-Pistole 26 anschließen und mit dieser in Fluidverbindung bringen. Bei der Austragsvorrichtung 40 kann die Bedienperson wahlweise die Niederdruck-Reinigungsmitteldüse 42 oder die Hochdruckdüse 44 auswählen und dadurch in Fluidverbindung mit der Hochdruckleitung 22 bringen.

Je nachdem, welche Austragseinheit angeschlossen ist oder ausgewählt wird, ist ausgangsseitig ein unterschiedlicher Querschnitt vorgesehen, durch den die unter Druck gesetzte Flüssigkeit austritt. Bei den Hochdruckdüsen 39 und 44 tritt Reinigungsflüssigkeit unter hohem Druck bei kleiner Querschnittsfläche und eher geringem Volumenstrom aus. Die Niederdruck-Reinigungsmitteldüsen 37 und 42 umfassen demgegenüber einen wesentlich größeren Öffnungsquerschnitt, und Flüssigkeit tritt mit hohem Volumenstrom und unter eher geringem Druck aus.

Durch Auswahl einer Hochdruckdüse 39 oder 44 einerseits bzw. einer Niederdruck-Reinigungsmitteldüse 37 oder 42 andererseits beeinflusst die Bedienperson im Betrieb des Hochdruckreinigungsgerätes 10 bei betätigter Bedieneinheit 24 den Druck am Ausgang der jeweiligen Düse. Dies beeinflusst auch den Druck in der Hochdruckleitung 22 und ausgangsseitig an der Hochdruckpumpe 16.

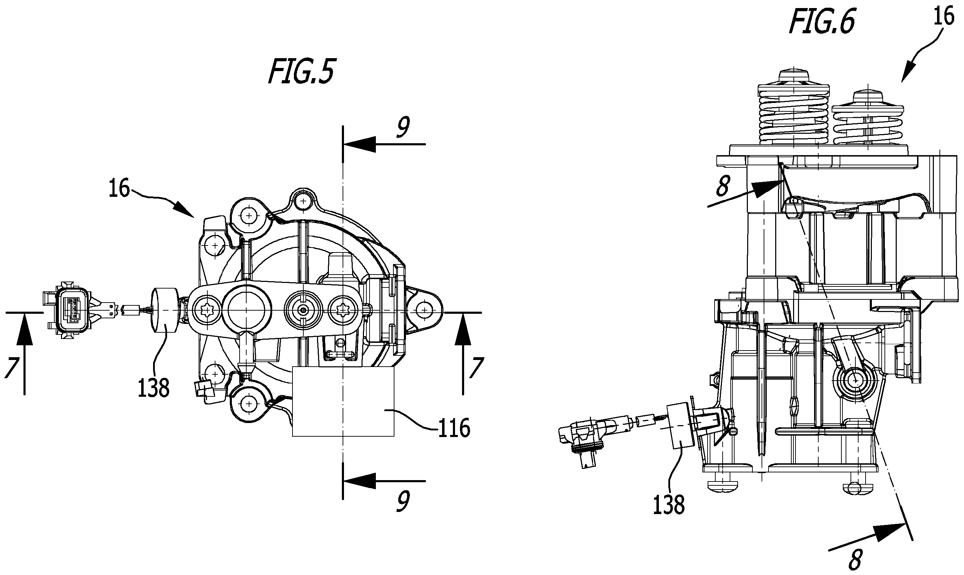

Wie insbesondere aus den Figuren 5 bis 7 hervorgeht, ist die Hochdruckpumpe 16 als Kolbenpumpe und insbesondere als Axialkolbenpumpe ausgestaltet. Die Hochdruckpumpe 16 umfasst einen Grundkörper 46, in dem eine Mehrzahl von Axialkolben (ein Axialkolben 48 gezeigt) linear verschieblich gelagert sind. Der Antriebsmotor 14 umfasst eine in der Zeichnung nicht dargestellte Taumelscheibe, durch deren Rotation die Axialkolben 48 bewegt werden.

Die Hochdruckpumpe 16 weist einen Saugraum 50 auf, der mit dem Pumpeneingang 18 strömungsverbunden ist oder diesen ausbildet. Der Saugraum 50 mündet in einen Pumpraum 52, wobei zwischen diese ein Saugventil 54 geschaltet ist. Angesaugte Flüssigkeit kann in den Pumpraum 52 eintreten und wird in diesem von den Axialkolben 48 unter Druck gesetzt.

Der Pumpraum 52 mündet in einen Druckraum 56, wobei zwischen diese ein Druckventil 58 geschaltet ist.

Der Druckraum 56 ist unterteilt in einen ersten Raumbereich 60 und einen zweiten Raumbereich 62. Aus dem Pumpraum 52 strömende Flüssigkeit tritt in den ersten Raumbereich 60 ein. Zwischen den Raumbereichen 60, 62 ist ein Rückschlagventil 64 eingesetzt. Im Betrieb der Hochdruckpumpe 16 kann das Rückschlagventil 64 eine Offenstellung einnehmen, und Flüssigkeit strömt durch die Raumbereiche 60 und 62 zum Pumpenausgang 20. Der Pumpenausgang 20 wird durch den Druckraum 56 ausgangsseitig gebildet oder ist mit diesem in Strömungsverbindung.

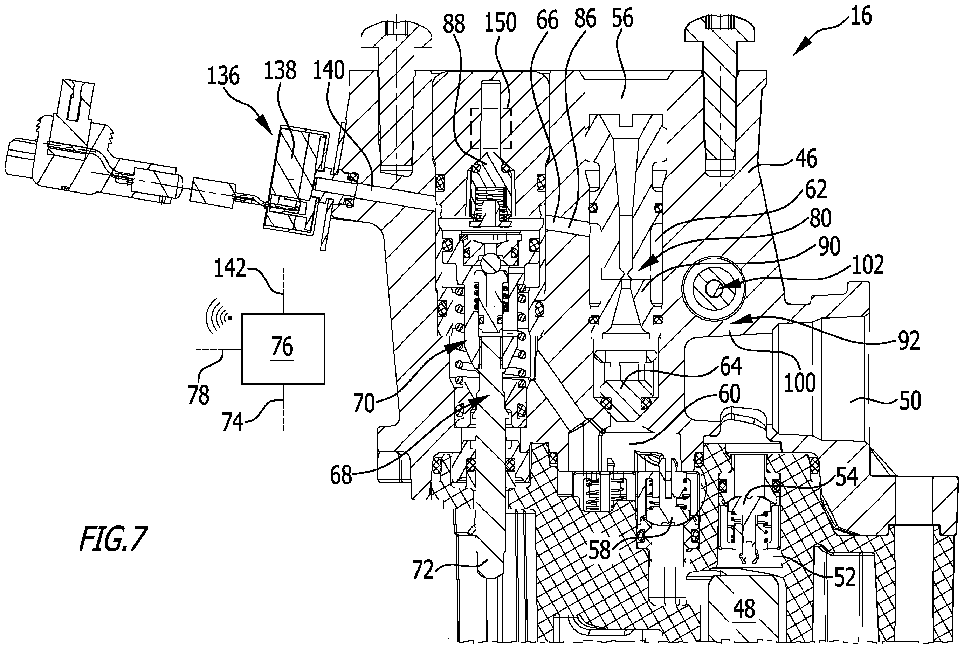

Eine vorteilhafte Ausführungsform der Hochdruckpumpe, so wie die Hochdruckpumpe 16, umfasst einen sogenannten Überströmer mit darin angeordnetem Überströmerventil. Diesbezüglich wird auf Figur 7 verwiesen.

In den Druckraum 56 mündet am zweiten Raumbereich 62 eine Steuerleitung 66. Die Steuerleitung 66 kann auch als Steuerkanal bezeichnet werden.

Flüssigkeit im Druckraum 56 kann dadurch das Überströmerventil 68 eines Überströmers 70 mit Druck beaufschlagen. Wird die Hochdruck-Pistole 26 im Betrieb des Hochdruckreinigungsgerätes 10 nicht mehr betätigt, führt dies zu einem Druckstoß über die Hochdruckleitung 22 bis in den Druckraum 56. In an sich bekannter Weise führt der Druckstoß über die Steuerleitung 66 zu einer Beaufschlagung des Überströmerventils 68. Dies führt dazu, dass das Überströmerventil 68 öffnet und ein Ventilstößel 72 des Überströmers 70 verschoben wird.

Der Ventilstößel 72 kann ein in der Zeichnung nicht dargestelltes Schaltelement, beispielsweise einen Mikroschalter, betätigen. Das Schaltelement steht über eine Signalleitung 74 mit einer Steuereinheit 76 der Hochdruckpumpe 16 in Verbindung. Alternativ kann das Schaltelement direkt mit dem Antriebsmotor 14 in Wirkverbindung stehen. Bei Vorliegen eines Schaltsignals kann die Steuereinheit 76 über eine Steuerleitung 78 (oder das Schaltelement) den Antriebsmotor 14 abschalten, so dass der Antrieb der Hochdruckpumpe 16 bei entfallender Betätigung der Hochdruck-Pistole 26 außer Kraft gesetzt wird. Wird die Hochdruck-Pistole 26 wieder betätigt, wird der Antriebsmotor 14 wieder aktiviert.

Das Hochdruckreinigungsgerät 10 umfasst eine Beimischeinrichtung 80, um der unter Druck gesetzten Flüssigkeit eine Reinigungschemikalie beizumischen. Die Beimischung der Reinigungschemikalie ist für den Betrieb mit den Niederdruck-Reinigungsmitteldüsen 37 und 42 vorgesehen. Die Beimischeinrichtung 80 umfasst am Hochdruckreinigungsgerät 10 eine Aufnahme 82 für einen Behälter 84, in dem die Reinigungschemikalie bevorratet ist. Die Aufnahme 82 steht über eine Zuführleitung 86, die abschnittsweise vom Grundkörper 46 umfasst ist, mit dem Druckraum 56 in Strömungsverbindung. Die Steuerleitung 66 bildet vorzugsweise einen Abschnitt der Zuführleitung 86. In die Zuführleitung 86 ist, beispielsweise nahe dem Überströmer 70, ein Rückschlagventil 88 geschaltet.

Die Zuführleitung 86 kann auch als Zuführkanal bezeichnet werden.

Die Beimischeinrichtung 80 umfasst ferner einen Injektor 90, der vorliegend ausgestaltet ist als Venturi-Injektor. Der Injektor 90 ist im Druckraum 56 angeordnet, insbesondere im zweiten Raumbereich 62. Die Zuführleitung 86 mündet im zweiten Raumbereich 62 in die Saugseite des Injektors 90.

Bei geringem Druck ausgangsseitig aufgrund des großen Querschnitts der Niederdruck-Reinigungsmitteldüsen 37 und 42 fällt der Flüssigkeitsdruck in der Zuführleitung 86 aufgrund der Saugwirkung des Injektors 90 so weit ab, dass das Rückschlagventil 88 öffnet. Insbesondere herrscht in der Zuführleitung 86 ein Druck unterhalb des Umgebungsdruckes der Atmosphäre (ungefähr kleiner als 1 bar). Die Reinigungschemikalie kann durch die Saugwirkung des Injektors 90 über die Zuführleitung 86 in den Injektor 90 strömen und wird der Flüssigkeit beigemischt. Das Gemisch aus Flüssigkeit und Reinigungschemikalie strömt zur Niederdruck-Reinigungsmitteldüse 37, 42 und kann über diese ausgetragen werden.

Ist andererseits die Hochdruckdüse 39 oder 44 an die Hochdruck-Pistole 26 angeschlossen, ist der Druck in der Hochdruckleitung 22 und damit im Druckraum 56 so hoch, dass die Saugwirkung des Injektors 90 entfällt. Der Druck in der Zuführleitung 86 ist ebenfalls hoch, das Rückschlagventil 88 bleibt geschlossen, und es wird keine Reinigungschemikalie angesaugt.

Durch Anschließen oder Auswählen einer Niederdruck-Reinigungsmitteldüse 37, 42 kann dadurch das Hochdruckreinigungsgerät 10, und insbesondere die Hochdruckpumpe 16, in einen Reinigungsmittelmodus überführt werden. Ist umgekehrt die Hochdruckdüse 39 oder 44 angeschlossen bzw. ausgewählt, nimmt das Hochdruckreinigungsgerät 10 und insbesondere die Hochdruckpumpe 16 einen Hochdruckmodus ein.

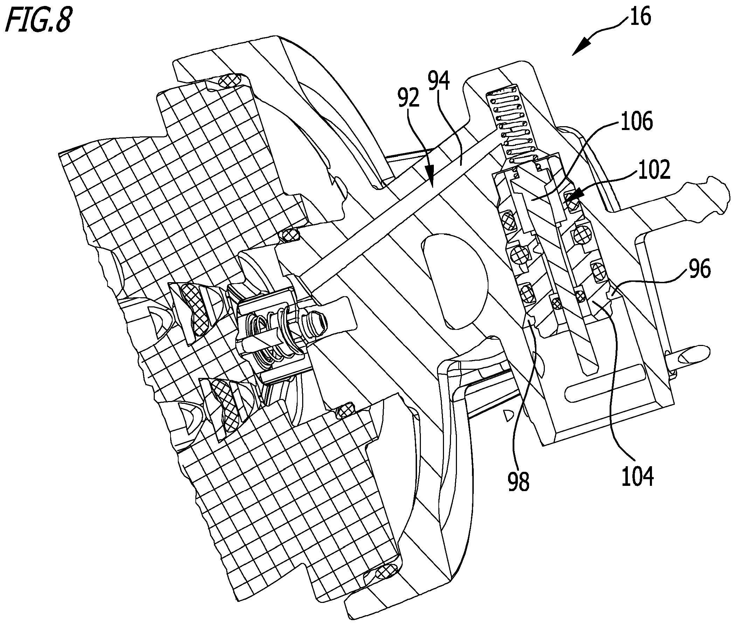

Wie insbesondere aus den Figuren 7 bis 12 hervorgeht, umfasst die Hochdruckpumpe 16 eine Rückführleitung 92. Über die Rückführleitung 92 ist der Druckraum 56 mit dem Saugraum 50 strömungsverbunden. Die Rückführleitung 92 weist einen im Grundkörper 46 gebildeten ersten Abschnitt auf, der in den Druckraum 56 und insbesondere dessen ersten Raumbereich 60 mündet (Figur 8). An den ersten Abschnitt 94 schließt sich ein zweiter Abschnitt 96 an, der einen Ventilraum 98 bildet. An den Ventilraum 98 schließt sich ein dritter Abschnitt 100 an, der in den Saugraum 50 mündet (Figur 7). Auch der zweite und der dritte Abschnitt 96, 100 sind im Grundkörper 46 gebildet.

Die Rückführleitung 92 kann auch als Rückführkanal bezeichnet werden.

Die Hochdruckpumpe 16 umfasst eine Ventileinheit 102, über die die freie Querschnittsfläche der Rückführleitung 92 veränderbar ist. Die Ventileinheit 102 umfasst eine Ventilkörperaufnahmeteil 104, das in den Ventilraum 98 eingesetzt ist, sowie einen Ventilkörper 106. Der Ventilkörper 106 ist ausgestaltet als Ventilstift 108.

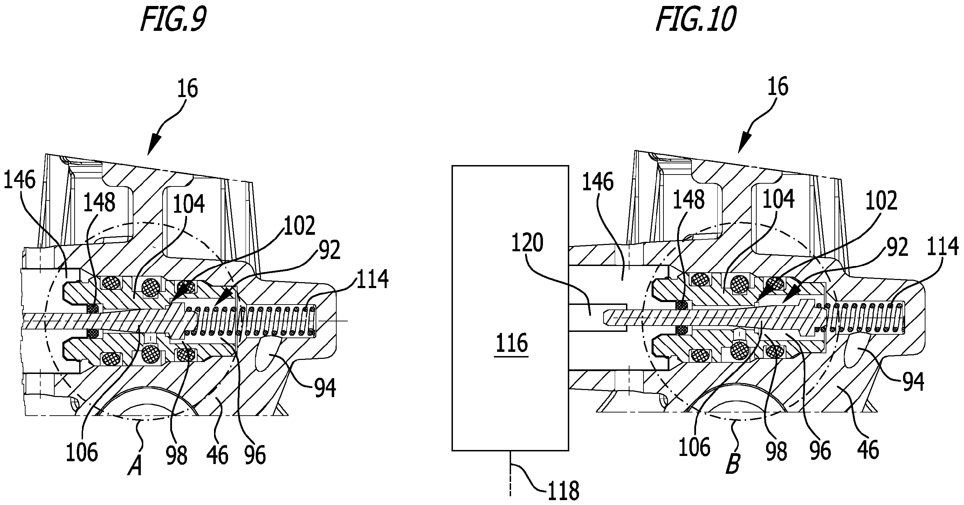

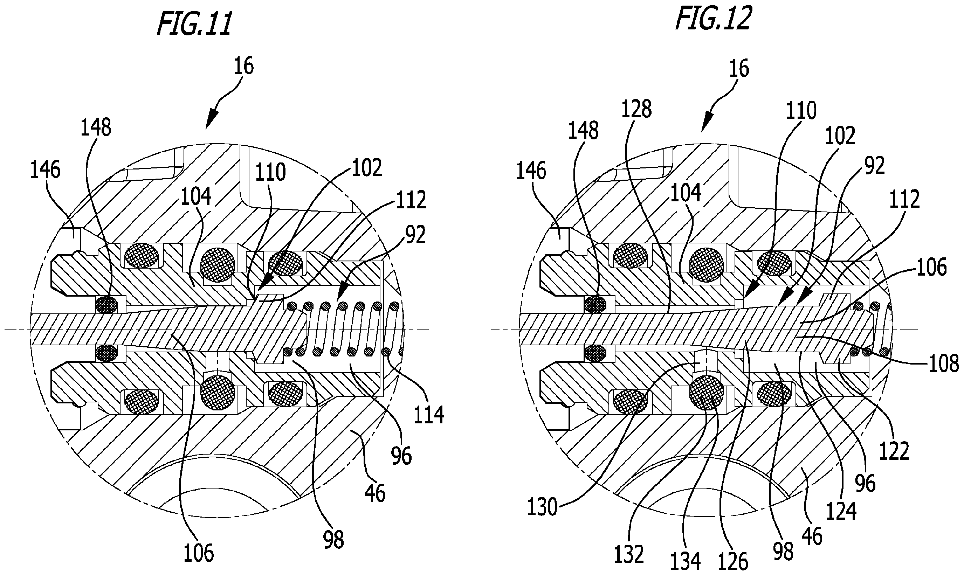

Das Ventilkörperaufnahmeteil 104 bildet einen Ventilsitz 110 für den Ventilstift 108. Der Ventilstift 108 kann in einer Schließstellung (Figuren 9 und 11) am Ventilsitz 110 mit einem Ventilkörperdichtabschnitt 112 dichtend oder im Wesentlichen dichtend anliegen. Die Rückführleitung 92 ist geschlossen.

Ein elastisches Element in Gestalt einer Schraubenfeder 114 beaufschlagt den Ventilstift 108 mit einer auf dessen Schließstellung gerichteten Kraft.

Die Hochdruckpumpe 16 umfasst eine Antriebseinheit 116, die der Ventileinheit 102 zugeordnet ist. Die Antriebseinheit 116 ist vorliegend insbesondere als elektrische Antriebseinheit ausgestaltet und steht über eine Steuerleitung 118 mit der Steuereinheit 76 in elektrischer Verbindung. Die Steuereinheit 76 kann die Antriebseinheit 116 ansteuern, um den Ventilstift 108 von der Schließstellung in mindestens eine Offenstellung und umgekehrt zu bewegen. Insbesondere kann der Ventilstift 108 in der Rückführleitung 92 und relativ zum Ventilkörperaufnahmeteil 104 verschoben werden. Das Überführen des Ventilstiftes 108 von der Schließstellung in die mindestens eine Offenstellung erfolgt entgegen der Schließkraft der Schraubenfeder 114.

Die Antriebseinheit 116 ist in der Zeichnung (in den Figuren 5 und 10) nur schematisch dargestellt. Beispielsweise umfasst die Antriebseinheit 116 einen Spindelantrieb. Der Spindelantrieb kann einen Stößel 120 linear bewegen, der mit dem Ventilstift 108 gekoppelt und beispielsweise mit diesem fest verbunden ist. Der Stößel 120 ist auf der der Schraubenfeder 114 abgewandten Seite des Ventilstiftes 108 angeordnet.

Die Antriebseinheit 116 kann einen Haltevorsprung 146 aufweisen, der in den Grundkörper 46 eingreift. Über den Haltevorsprung 146 kann die Ventileinheit 102 im Ventilraum 98 gehalten werden. Beispielsweise ist der Haltevorsprung 146 kraft- und/oder formschlüssig in den Ventilkörper 106 eingesetzt. Die Ventileinheit 102 kann sich am Haltevorsprung 146 gegen den auf sie wirkenden Druck in der Rückführleitung 92 abstützen.

Über den Haltevorsprung 146 kann vorzugsweise ein Dichtelement 148 abgestützt werden. Das Dichtelement 148 dichtet zwischen dem Ventilraum 98 und dem Haltevorsprung 146. Beispielsweise ist das Dichtelement 148 als den Ventilstift 108 umgebender O-Ring ausgestaltet.

Der Ventilkörperdichtabschnitt 112 ist zum Beispiel an einem Ringkragen 122 gebildet, an dem sich die Schraubenfeder 114 auf der gegenüberliegenden Seite abstützt.

Ausgehend vom Ventilkörperdichtabschnitt 112 umfasst der Ventilstift 108 zunächst einen ersten, zylindrischen Abschnitt 124 und anschließend einen zweiten, konischen Abschnitt 126. Der zylindrische Abschnitt 124 ist so bemessen, dass der Ventilstift 108 mit etwas Spiel im Ventilkörperaufnahmeteil 104 angeordnet ist. Hebt der Ventilstift 108 vom Ventilsitz 110 ab, kann Flüssigkeit durch die Rückführleitung 92 strömen.

Der konische Abschnitt 126 ist sich konisch verjüngend ausgestaltet, insbesondere ist der Ventilstift 108 doppelt konisch verjüngt. In zunehmendem Abstand vom Ventilkörperdichtabschnitt 112 nimmt die Verjüngung zu. Darunter kann vorliegend insbesondere verstanden werden, dass die Änderung des Durchmessers und damit des Querschnittes des Ventilstiftes 108 pro Verstellweg oder Längenabschnitt des Ventilstiftes 108 zunimmt. In Gegenrichtung der Richtung zur Überführung des Ventilstiftes 108 von der Schließstellung in die mindestens eine Offenstellung weist der Ventilstift 108 daher eine Verjüngung auf, welche mit zunehmendem Abstand vom Ventilkörperdichtabschnitt 112 zunimmt.

Dies gibt insbesondere die Möglichkeit, in der mindestens einen Offenstellung die Änderung der freien Querschnittsfläche der Rückführleitung 92 am Ventilsitz 110 pro Verstellweg des Ventilstiftes 108 relativ zum Ventilsitz 110 abhängig von der Position des Ventilstiftes 108 relativ zum Ventilsitz 110 zu machen. Insbesondere nimmt die Änderung der freien Querschnittsfläche durch die zunehmende Verjüngung des Ventilstiftes 108 mit zunehmendem Abstand des Ventilkörperdichtabschnittes 112 vom Ventilsitz 110 zu.

An den konischen Abschnitt 126 schließt sich mit größerem Abstand vom Ventilkörperdichtabschnitt 112 als dieser ein weiterer zylindrischer Abschnitt 128 des Ventilstiftes 108 an, dessen Durchmesser geringer ist als derjenige des zylindrischen Abschnittes 124. Das Dichtelement 148 umgibt den zylindrischen Abschnitt 124.

Am Ventilstift 108 strömt die Flüssigkeit durch die Rückführleitung 92 axial am Ventilsitz 110 vorbei (in Längsrichtung des Ventilstiftes 108) und anschließend dem Ventilsitz 110 nachgelagert radial vom Ventilstift 108 weg. Die Rückführleitung 92 ist strömungsabwärts des Ventilsitzes 110 daher radial bezüglich der Längsrichtung des Ventilstiftes 108 ausgerichtet. Zu diesem Zweck ist im Ventilkörperaufnahmeteil 104 ein Durchgang 130 in den dritten Abschnitt 100 gebildet.

Strömungsabwärts der Ventileinheit 102 ist in der Rückführleitung 92 ein Druckventil 132 vorgesehen. Das Druckventil 132 ist ausgestaltet als Ventilring 134, insbesondere als O-Ring. Der Ventilring 134 umgibt das Ventilkörperaufnahmeteil 104 und kann den Durchgang 130 und damit die Rückführleitung 92 dichtend oder im Wesentlichen dichtend verschließen. Übersteigt der Druck in der Rückführleitung 92 einen Schwellenwertdruck, öffnet das Druckventil 132. Liegt der Druck unterhalb eines Schwellenwertdruckes, ist die Rückführleitung 92 verschlossen.

Das Druckventil 132 hat den Zweck, dass bei Inbetriebnahme der Hochdruckpumpe 16 ein Saugbetrieb (Flüssigkeit wird am Pumpeneingang 18 angesaugt, der nicht an eine Druckleitung angeschlossen ist) ausgeführt werden kann, auch wenn der Ventilstift 108 eine Offenstellung einnimmt. Das Druckventil 132 verhindert in diesem Fall, dass Luft über die Rückführleitung 92 angesaugt wird.

Die Hochdruckpumpe 16 umfasst ferner eine Erfassungseinheit 136. Mit der Erfassungseinheit 136 ist erfassbar, wenn ein Flüssigkeitsdruck druckseitig des Pumpraumes 52 einen Schwellenwertdruck unterschreitet. Außerdem ist über die Erfassungseinheit 136 erfassbar, wenn ein Schwellenwertdruck überschritten wird.

Vorzugsweise ist das Unterschreiten bzw. Überschreiten eines Schwellenwertdruckes in der Hochdruckpumpe 16 und bevorzugt am oder im Druckraum 56 erfassbar, insbesondere in einer an diesen angeschlossenen oder in diesen mündenden Flüssigkeitsleitung. Bei einer vorteilhaften Ausführungsform der Hochdruckpumpe umfasst die Erfassungseinheit 136 einen Drucksensor 138 oder ist als solcher ausgebildet, mit dem der Flüssigkeitsdruck gemessen werden kann.

Der Drucksensor 138 ist so an der Hochdruckpumpe 16 angeordnet, dass ein Flüssigkeitsdruck in der Zuführleitung 86 erfassbar ist, die in den Druckraum 56 mündet. Der Druck in der Zuführleitung 86 steht mit dem Pumpendruck der Hochdruckpumpe 16, der am Pumpenausgang 20 ansteht, in Beziehung. Über die Erfassung des Flüssigkeitsdruckes in der Zuführleitung 86 am Druckraum 56 kann dadurch auch auf den Pumpendruck geschlossen werden.

Der Drucksensor 138 ist beispielsweise an eine Messleitung 140 angeschlossen, die eine Verlängerung der Steuerleitung 66 ist. Über eine Signalleitung 142 steht der Drucksensor 138 mit der Steuereinheit in Verbindung, um dieser ein dem Flüssigkeitsdruck entsprechendes Signal bereitzustellen. Die Messleitung 140 kann auch als Messkanal bezeichnet werden.

Die Funktionsweise des Hochdruckreinigungsgerätes 10 und der Hochdruckpumpe 16 wird nachfolgend erläutert.

Wie erwähnt, ist zum einen ein Hochdruckmodus vorgesehen und zum anderen ein Reinigungsmittelmodus. Im Hochdruckmodus wird der mit dem Drucksensor 138 erfassbare Flüssigkeitsdruck am Druckraum 56 geregelt. Im Reinigungsmittelmodus wird die Ventileinheit 102 angesteuert, um den Volumenstrom der abzugebenden Flüssigkeit zu steuern und damit die Dosierung der Reinigungschemikalie zu steuern.

Ist eine Hochdruckdüse 39 oder 44 angeschlossen bzw. ausgewählt, herrscht bei betätigter Bedieneinheit 24 im Druckraum 56 und damit auch in der Zuführleitung 86 ein hoher Druck. Die Bedienperson gibt über die Tasten "+" 30 und "-" 32 eine Druckstufe vor. Jede Druckstufe entspricht einem Pumpendruck am Pumpenausgang 20 und damit einem mit diesem in Beziehung stehenden Flüssigkeitsdruck in der Zuführleitung 86.

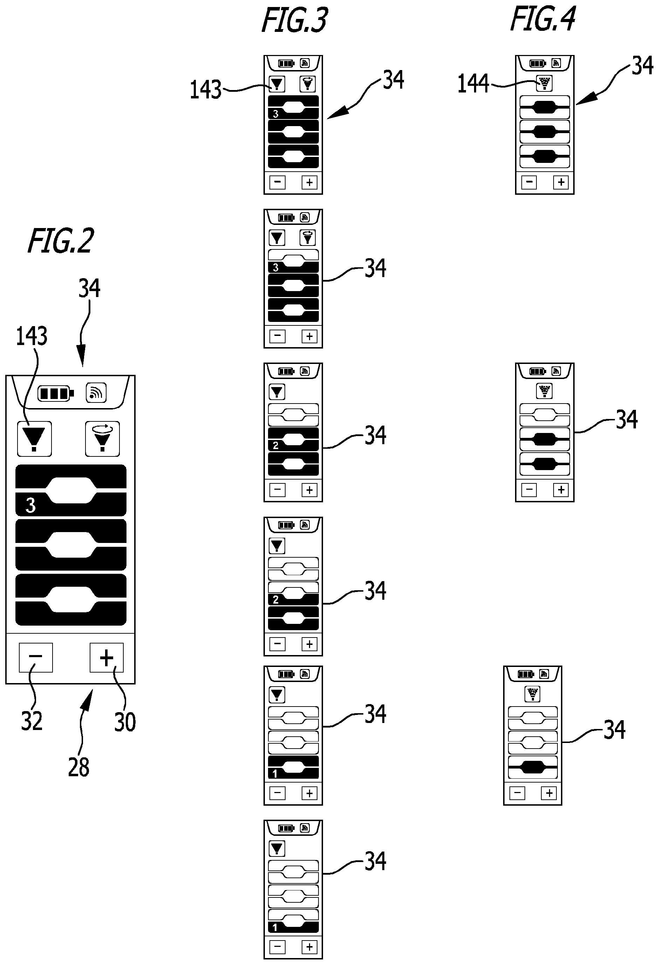

Figur 3 zeigt beispielhaft die Anzeigeeinheit 34 im Hochdruckmodus in verschiedenen, von oben nach unten abnehmenden Druckstufen. Es sind insgesamt sechs verschiedene Druckstufen vorgesehen, die die Bedienperson mit den Tasten 30 und 32 auswählen kann. Durch Betätigung der Taste "+" 30 wird der Druck gesteigert und durch Betätigung der Taste "-" 32 wird der Druck erniedrigt.

Die Vorgabe der Bedienperson wird kabellos von der Eingabeeinheit 28 an die mit ihr gekoppelte Steuereinheit 76 übertragen. Die Steuereinheit 76 betätigt die Antriebseinheit 116. Je nach Vorgabe durch die Bedienperson wird unter Betätigung der Antriebseinheit 116 der Flüssigkeitsdruck, der mit dem Drucksensor 138 erfasst wird, geregelt. Das Hochdruckreinigungsgerät 10 und insbesondere die Hochdruckpumpe 16 nimmt einen Regelungsmodus ein.

Die Einnahme des Hochdruckmodus kann von der Steuereinheit 76 dadurch festgestellt werden, dass der Drucksensor 138 einen über einem Schwellenwertdruck liegenden Flüssigkeitsdruck in der Zuführleitung 86 erfasst. Bei Einnahme des Hochdruckmodus wird an der Anzeigeeinheit 34 beispielsweise ein Symbol 143 einer Hochdruckdüse dargestellt. Ebenfalls dargestellt wird eine Information, die der Vorgabe durch die Bedienperson zugeordnet ist. Hierbei handelt es sich um durch schwarze Striche oder Balken symbolisierte Darstellungen der Druckstufen.

Informationen zur Änderung der Anzeigeeinheit 34 können kabellos von der Steuereinheit 76 an die mit ihr gekoppelte Anzeigeeinheit 34 übertragen werden.

Bei der höchsten Druckstufe (oben in Figur 3) ist beispielsweise die Rückführleitung 92 geschlossen, und der Ventilkörperdichtabschnitt 112 liegt dichtend am Ventilsitz 110 an (Figuren 9 und 11). Durch Erniedrigung der Druckstufe wird die Stellung der Ventileinheit 102 dadurch geändert, dass der Ventilstift 108 in eine Offenstellung überführt wird. Dadurch vergrößert sich die freie Querschnittsfläche der Rückführleitung 92, Flüssigkeit strömt vom Druckraum 56 zum Saugraum 50, und der Pumpendruck am Pumpenausgang 20 wird verringert. Dies wird über den Druck in der Zuführleitung 86 erfasst. Der Druck in der Zuführleitung 86 wird durch Ansteuerung der Antriebseinheit 116 geregelt.

Entsprechendes gilt bei weiterer Erniedrigung der Druckstufen, wobei abhängig von der Druckstufe der Ventilstift 108 in eine Offenstellung überführt wird, in der die freie Querschnittsfläche der Rückführleitung 92 weiter zunimmt, der Volumenstrom durch die Rückführleitung 92 gesteigert wird und der Pumpendruck am Pumpenausgang 20 verringert wird. In der jeweiligen Druckstufe erfolgt eine Regelung des Flüssigkeitsdruckes.

Wird der Ventilstift 108 in eine Offenstellung überführt, öffnet das Druckventil 132, so dass eine Strömung durch die Rückführleitung 92 freigegeben ist.

Im Regelungsmodus wird der Ventilstift 108 von der Antriebseinheit 116 zur Umsetzung der niedrigsten Druckstufe nicht um den gesamtmöglichen Verstellweg verschoben. Die Verschiebung des Ventilstiftes 108 erfolgt beispielsweise lediglich im Ausmaß des konischen Abschnittes 126 im Anschluss an den zylindrischen Abschnitt 124 so weit, wie sich die Konizität des Abschnittes 126 nicht ändert. Dies entspricht dem Bereich der konstanten Verjüngung des konischen Abschnittes 126 und einer Änderung der freien Querschnittsfläche der Rückführleitung 92 pro Verstellweg, die konstant ist.

Wird eine Niederdruck-Reinigungsmitteldüse 37 oder 42 angeschlossen bzw. ausgewählt, führt der große Öffnungsquerschnitt bei betätigter Bedieneinheit 24 zu dem Druckabfall in der Zuführleitung 86. Mit dem Drucksensor 138 kann dadurch erfasst werden, dass der Flüssigkeitsdruck am Druckraum 56 einen Schwellenwertdruck unterschreitet. Die Steuereinheit 76 analysiert das Signal des Drucksensors 138 und kann feststellen, dass die Reinigungsmitteldüse 37 oder 42 eingesetzt wird. Die Steuereinheit 76 schaltet um in einen Reinigungsmittelmodus. An die Anzeigeeinheit 34 wird ein diesbezüglicher Hinweis kabellos übertragen. Insbesondere wird ein Symbol 144 für eine Niederdruck-Reinigungsmitteldüse dargestellt.

Die Anzeigeeinheit 34 ändert die Bildanzeige von dem in Figur 3 dargestellten Hochdruckmodus in den in Figur 4 dargestellten Reinigungsmittelmodus.

Im Reinigungsmittelmodus nimmt das Hochdruckreinigungsgerät 10 und insbesondere die Hochdruckpumpe 16 einen Nichtregelmodus ein. Der Flüssigkeitsdruck, der vom Drucksensor 138 erfasst wird, wird nicht mehr geregelt.

Stattdessen steuert die Bedienperson über die Tasten "+" 30 und "-" 32 die Stellung der Ventileinheit 102. Dies hat insbesondere zur Folge, dass die freie Querschnittsfläche der Rückführleitung 92 und der Volumenstrom durch diese hindurch von der Bedienperson gesteuert wird.

Im Reinigungsmittelmodus oder Nichtregelungsmodus öffnet die Ventileinheit 102, und durch den zunehmenden Volumenstrom durch die Rückführleitung 92 ändert sich der Volumenstrom am Pumpenausgang 20. Da zugleich die Reinigungschemikalie über die Zuführleitung 86 in den Injektor 90 gesaugt wird, ändert sich das Mischverhältnis zwischen der Flüssigkeit und der Reinigungschemikalie.

Die Bedienperson kann über die Tasten 30 und 32 das Mischverhältnis stufenweise verändern. Insgesamt sind drei unterschiedliche Mischverhältnisse stufenweise einstellbar, Figur 4 zeigt diesbezüglich die jeweilige Bildanzeige der Anzeigeeinheit 34. Unterschiedliche Mischverhältnisse werden beispielsweise durch eine unterschiedliche Anzahl von Linien oder Balken symbolisiert. Oben in Figur 4 ist die Situation maximaler Dosierung der Reinigungschemikalie dargestellt, d.h. ein hohes Mischverhältnis der Reinigungschemikalie mit der Flüssigkeit (hoher Anteil der Reinigungschemikalie). Nach unten nimmt das Mischverhältnis der Reinigungschemikalie ab.

In den Figuren 3 und 4 ist ferner erkennbar, dass die Bildanzeige der Anzeigeeinheit 34 im Hochdruckmodus und im Reinigungsmittelmodus zumindest teilweise "invertiert" ist. Während im Hochdruckmodus die Druckstufen über Balken mit dazwischenliegenden Zwischenräumen symbolisiert werden, symbolisieren im Reinigungsmittelmodus in diesen Zwischenräumen angezeigte Balken das Mischverhältnis der Reinigungschemikalie mit der Flüssigkeit.

Die Vorgabe des Benutzers an den Tasten 30 und 32 wird von der Steuereinheit 76 zur Ansteuerung der Antriebseinheit 116 umgesetzt. Die Antriebseinheit 116 verschiebt den Ventilstift 108 soweit, dass abhängig von der gewählten Reinigungschemikaliendosierung (Mischverhältnis) die freie Querschnittsfläche der Rückführleitung 92 verändert wird.

In den Figuren 3 und 4 ist ferner erkennbar, dass die Darstellung an der Anzeigeeinheit 34 für die Druckstufe einerseits (Fig. 3) und das Mischverhältnis andererseits (Fig. 4) entgegengesetzte Stellungen der Ventileinheit 102 und damit verbundene freie Querschnittsflächen der Rückführleitung 92 widerspiegelt. Im Hochdruckmodus ist die Ventileinheit 102 bei hoher Druckstufe (oben in Fig. 3) geschlossen, bei niedriger Druckstufe (unten in Fig. 3) geöffnet. Im Reinigungsmittelmodus demgegenüber ist die Ventileinheit 102 bei hohem Anteil der Reinigungsmittelchemikalie (oben in Fig. 4) weiter geöffnet, als dies bei niedrigem Anteil der Reinigungsmittelchemikalie (unten in Fig. 4) der Fall ist.

Insbesondere wird der Ventilstift 108 im Reinigungsmittelmodus soweit verschoben, dass die Änderung der freien Querschnittsfläche über die zunehmende Verjüngung des konischen Abschnittes 126 erfolgt. Pro Verstellweg des Ventilkörpers 106 ändert sich daher die freie Querschnittsfläche in einem größeren Ausmaß, als dies pro Verstellweg im Hochdruckmodus der Fall ist.

Wird erneut eine Hochdruckdüse 39 oder 44 angeschlossen bzw. ausgewählt, wird bei betätigter Bedieneinheit 24 mit dem Drucksensor 138 abermals erfasst, dass der Druck in der Zuführleitung 86 wieder den erstgenannten Schwellenwertdruck überschreitet. Das Hochdruckreinigungsgerät 10 schaltet in den bereits erläuterten Hochdruckmodus.

Die Schwellenwertdrücke, oberhalb dessen der Hochdruckmodus bzw. unterhalb dessen der Reinigungsmittelmodus erkannt wird, können vorzugsweise identisch sein.

Die Geometrie des Ventilstiftes 108, der insbesondere einen doppelt konischen Abschnitt 126 aufweist, gibt die Möglichkeit, im Hochdruckmodus die unterschiedliche Einstellung der Druckstufen und die Regelung des Flüssigkeitsdruckes zuverlässig sicherzustellen. Im Reinigungsmittelmodus kann durch die Geometrie der Volumenstrom der Flüssigkeit durch die Rückführleitung 92 und damit das Mischverhältnis der Reinigungschemikalie mit der Flüssigkeit zuverlässig eingestellt werden. Daher erlaubt die Unterteilung des "Regelbereiches" für den Hochdruckmodus und des "Steuerbereiches" des Ventilstiftes 108 einen zuverlässigen Betrieb der Hochdruckpumpe 16 sowohl im Regelungsmodus als auch im Nichtregelungsmodus.

Das Hochdruckreinigungsgerät 10 und die Hochdruckpumpe 16 erlauben es, abhängig von der jeweils ausgewählten bzw. angeschlossenen Austragseinheit in eine Regelung des Flüssigkeitsdruckes oder eine Steuerung der Dosierung (des Mischverhältnisses) der Reinigungschemikalie umzuschalten. Die Eingabeeinheit 28 zur Auswahl der Druckstufe bzw. zur Auswahl des Mischverhältnisses ist identisch. Je nach Betriebsmodus stellt die Anzeigeeinheit 34 die Druckstufen oder die Stufen für das Mischverhältnis dar. Das Hochdruckreinigungsgerät 10 zeichnet sich daher auch durch eine besonders benutzerfreundliche und intuitive Bedienung aus.

Alternativ oder ergänzend zur Rückführleitung 92 und zur Ventileinheit 102 sowie der Antriebseinheit 116 kann vorgesehen sein, dass die Hochdruckpumpe ein Ventil 150 aufweist, über das die Dosierung der Reinigungschemikalie und damit das Mischverhältnis mit der Flüssigkeit beeinflusst werden kann. Ein derartiges Dosierventil 150 ist beispielsweise in die Zuführleitung 86 geschaltet. Figur 7 zeigt beispielhaft die Anordnung des Dosierventils 150, vorzugsweise in Strömungsrichtung der Reinigungschemikalie dem Rückschlagventil 88 vorgelagert.

Das Dosierventil 150 kann von Hand betätigbar oder einstellbar sein. Denkbar ist auch eine Ansteuerung des Dosierventils 150 von der Steuereinheit 76 in Abhängigkeit von der Vorgabe der Bedienperson an der Eingabeeinheit 28.

Beim Hochdruckreinigungsgerät 10 erfolgt im Hochdruckmodus eine Regelung des Flüssigkeitsdruckes bevorzugt nur dann, wenn der Antriebsmotor 14 in Betrieb ist. Dies kann beispielsweise von der Steuereinheit 76 festgestellt werden. Dadurch kann vermieden werden, dass bei abgeschaltetem Antriebsmotor 14 und infolgedessen eintretender Änderung des Flüssigkeitsdruckes, der mit dem Drucksensor 138 erfasst wird, eine überflüssige Druckregelung erfolgt.

In entsprechender Weise wird der Betriebsmodus zwischen dem Hochdruckmodus und dem Reinigungsmittelmodus und umgekehrt vorzugsweise nur dann umgeschaltet, wenn der Antriebsmotor 14 in Betrieb ist, ebenso wie der betriebsmodusabhängige Inhalt der Anzeigeeinheit 34.

## Patentansprüche

1. Hochdruckreinigungsgerät (10) mit einer Hochdruckpumpe (16), die einen Saugraum (50) umfasst, mindestens einen diesem nachgelagerten Pumpraum (52), in dem Flüssigkeit unter Druck gesetzt wird, und einen dem Pumpraum (52) nachgelagerten Druckraum (56), mit einer Rückführleitung (92), über die der Druckraum (56) mit dem Saugraum (50) in Strömungsverbindung steht, und mit einer Ventileinheit (102), mit der eine freie Querschnittsfläche der Rückführleitung (92) veränderbar ist, **dadurch gekennzeichnet, dass** die Hochdruckpumpe (16) die Rückführleitung (92) und die Ventileinheit (102) umfasst, und dadurch, dass das Hochdruckreinigungsgerät (10) eine der Ventileinheit (102) zugeordnete Antriebseinheit (116), eine mit der Antriebseinheit (116) gekoppelte Steuereinheit (76) und einen mit der Steuereinheit (76) gekoppelten Drucksensor (138) umfasst, mit dem ein Flüssigkeitsdruck druckseitig des Pumpraumes (52) erfassbar ist, und wobei die Steuereinheit (76) die Antriebseinheit (116) zur Betätigung der Ventileinheit (102) ansteuert, zum Regeln des Flüssigkeitsdruckes abhängig vom Signal des Drucksensors (138) auf einen vorgegebenen oder vorgebbaren Flüssigkeitsdruck unter Veränderung der freien Querschnittsfläche der Rückführleitung (92).

2. Hochdruckreinigungsgerät nach Anspruch 1, **dadurch gekennzeichnet, dass** der Flüssigkeitsdruck am oder im Druckraum (56) erfassbar ist.

3. Hochdruckreinigungsgerät nach Anspruch 1 oder 2, **dadurch gekennzeichnet, dass** zumindest eines der Folgenden gilt:
- der Flüssigkeitsdruck ist der Steuereinheit (76) stufenweise oder kontinuierlich vorgebbar;
- die freie Querschnittsfläche der Rückführleitung (92) ist zum Regeln des Flüssigkeitsdruckes stufenweise oder kontinuierlich veränderbar.

4. Hochdruckreinigungsgerät nach einem der voranstehenden Ansprüche, **dadurch gekennzeichnet, dass** die Ventileinheit (102) einen Ventilkörper (106) umfasst, mit dem die Antriebseinheit (116) gekoppelt ist, und einen Ventilsitz (110), an dem der Ventilkörper (106) in einer Schließstellung dichtend oder im Wesentlichen dichtend anliegt und von dem der Ventilkörper (106) in mindestens eine Offenstellung zur Änderung der freien Querschnittsfläche der Rückführleitung (92) anhebbar ist, insbesondere dass der Ventilkörper (106) als Ventilstift (108) ausgebildet ist, der in Längsrichtung in der Rückführleitung (92) bewegbar und insbesondere verschiebbar ist.

5. Hochdruckreinigungsgerät nach Anspruch 4, **dadurch gekennzeichnet, dass** in der mindestens einen Offenstellung die Änderung der freien Querschnittsfläche am Ventilsitz (110) pro Verstellweg des Ventilkörpers (106) relativ zum Ventilsitz (110) abhängig ist von der Position des Ventilkörpers (106) relativ zum Ventilsitz (110), wobei der Ventilstift (108) insbesondere, zumindest abschnittsweise, eine Verjüngung aufweist und die Verjüngung zunimmt mit zunehmendem Abstand von einem in der Schließstellung am Ventilsitz (110) anliegenden Ventilkörperdichtabschnitt (112) des Ventilstiftes (108).

6. Hochdruckreinigungsgerät nach Anspruch 4 oder 5, **dadurch gekennzeichnet, dass** die Rückführleitung (92) strömungsabwärts des Ventilsitzes (110) quer zur Längsrichtung des Ventilkörpers (106) ausgerichtet ist.

7. Hochdruckreinigungsgerät nach einem der voranstehenden Ansprüche, **dadurch gekennzeichnet, dass** die Antriebseinheit (116) eine elektrische, mechanische, hydraulische und/oder pneumatische Antriebseinheit (116) ist, vorzugsweise dass die Antriebseinheit (116) einen Spindelantrieb umfasst.

8. Hochdruckreinigungsgerät nach einem der voranstehenden Ansprüche, **dadurch gekennzeichnet, dass** die Hochdruckpumpe (16) einen im Druckraum (56) angeordneten Injektor (90) umfasst und eine in diesen mündende Zuführleitung (86) für eine der Flüssigkeit beizumischende Reinigungschemikalie, und dass mit dem Drucksensor (138) der Druck in der Zuführleitung (86) erfassbar ist, insbesondere dass mit dem Drucksensor (138) ein Flüssigkeitsdruck unterhalb eines vorgegebenen oder vorgebbaren Schwellenwertdruckes erfassbar ist.

9. Hochdruckreinigungsgerät nach Anspruch 8, **dadurch gekennzeichnet, dass** die Hochdruckpumpe (16), bei einem Flüssigkeitsdruck unterhalb des vorgegebenen oder vorgebbaren Schwellenwertdruckes, von einem Regelungsmodus, in dem die Regelung des Flüssigkeitsdruckes erfolgt, in einen Nichtregelungsmodus, in dem keine Regelung des Flüssigkeitsdruckes erfolgt, überführt wird.

10. Hochdruckreinigungsgerät nach Anspruch 9, **dadurch gekennzeichnet, dass** eine Stellung der Ventileinheit (102) von der Steuereinheit (76) zur Veränderung der freien Querschnittsfläche im Nichtregelungsmodus abhängig von einer der Steuereinheit (76) zugeführten Vorgabe steuerbar ist, insbesondere dass die Ventileinheit (102) stufenweise und/oder kontinuierlich verstellbar ist.

11. Hochdruckreinigungsgerät nach einem der voranstehenden Ansprüche, **dadurch gekennzeichnet, dass** das Hochdruckreinigungsgerät (10) eine mit der Steuereinheit gekoppelte Eingabeeinheit (28) umfasst, über die der Steuereinheit (76) von einer Bedienperson ein Flüssigkeitsdruck vorgebbar ist, insbesondere dass das Hochdruckreinigungsgerät (10) eine Anzeigeeinheit (34) umfasst, an der der Bedienperson eine dem vorgegebenen Flüssigkeitsdruck zugeordnete Information anzeigbar ist.

12. Hochdruckreinigungsgerät nach einem der voranstehenden Ansprüche, **dadurch gekennzeichnet, dass** das Hochdruckreinigungsgerät (10) eine Beimischeinrichtung (80) zum Beimischen einer Reinigungschemikalie umfasst, welche Beimischeinrichtung (80) eine Aufnahme (82) für einen Behälter (84) mit der Reinigungschemikalie aufweist, einen im Druckraum (56) angeordneten Injektor (90) und eine Zuführleitung (86) von der Aufnahme zum Injektor (90).

13. Hochdruckreinigungsgerät nach einem der voranstehenden Ansprüche, **dadurch gekennzeichnet, dass** das Hochdruckreinigungsgerät (10) eine Bedieneinheit (24) umfasst, die über eine Hochdruckleitung (22) mit dem Druckraum (56) in Strömungsverbindung steht oder bringbar ist und an die mindestens eine Austragseinheit (36, 38, 41, 43) für unter Druck gesetzte Flüssigkeit anschließbar ist oder an dieser angeordnet ist und dass die Bedieneinheit (24) die Eingabeeinheit (28) und/oder die Anzeigeeinheit umfasst.

14. Hochdruckreinigungsgerät nach Anspruch 13, **dadurch gekennzeichnet, dass** als erste Austragseinheit (38, 43) eine Hochdruckdüse (39, 44) vorgesehen ist und als zweite Austragseinheit (36, 41) eine Niederdruck-Reinigungsmitteldüse (37, 42), die wahlweise an die Bedieneinheit (24) anschließbar sind und/oder dass das Hochdruckreinigungsgerät (10) eine Austragsvorrichtung (40) aufweist, die an der Bedieneinheit (24) angeordnet oder an diese anschließbar ist und die eine Hochdruckdüse (39, 44) und eine Niederdruck-Reinigungsmitteldüse (37, 42) aufweist, die wahlweise mit der Hochdruckleitung (22) in Fluidverbindung bringbar sind.

15. Hochdruckreinigungsgerät nach Anspruch 14, **dadurch gekennzeichnet, dass** bei Anschluss oder Auswahl der Niederdruck-Reinigungsmitteldüse (37, 42) im Betrieb des Hochdruckreinigungsgerätes (10) ein Abfall des Flüssigkeitsdruckes unter einen vorgegebenen oder vorgebbaren Schwellenwertdruck erfassbar ist und dass der Bedienperson an einer Hinweiseinheit des Hochdruckreinigungsgerätes (10) ein diesbezüglicher Hinweis bereitstellbar ist, der die Information aufweist, dass das Hochdruckreinigungsgerät (10), insbesondere die Hochdruckpumpe (16), einen Reinigungsmittelmodus einnimmt, wobei die Hochdruckpumpe (16) im Reinigungsmittelmodus einen Nichtregelungsmodus einnimmt, in dem keine Regelung des Flüssigkeitsdruckes erfolgt.

16. Hochdruckreinigungsgerät nach Anspruch 15, **dadurch gekennzeichnet, dass** im Reinigungsmittelmodus von der Bedienperson über die Eingabeeinheit (28) eine Stellung der Ventileinheit (102) zur Veränderung der freien Querschnittsfläche steuerbar ist, insbesondere dass das Hochdruckreinigungsgerät (10) eine Beimischeinrichtung (80) umfasst zum Beimischen einer Reinigungschemikalie, deren Mischverhältnis mit der unter Druck gesetzten Flüssigkeit abhängig von der Stellung der Ventileinheit (102) steuerbar ist.

17. Hochdruckreinigungsgerät nach Anspruch 16, **dadurch gekennzeichnet, dass** die Eingabeeinheit (28) Eingabeelemente (30, 32) umfasst, mit denen bei Vorliegen des Reinigungsmittelmodus die Stellung der Ventileinheit (102) vorgebbar ist und in Abwesenheit des Reinigungsmittelmodus der Flüssigkeitsdruck vorgebbar ist.

## Claims

1. High-pressure cleaning apparatus (10) with a high-pressure pump (16) that comprises a suction chamber (50), at least one pump chamber (52) which is arranged downstream thereof and in which liquid is pressurized, and a pressure chamber (56) arranged downstream of the pump chamber (52), with a return line (92) via which the pressure chamber (56) is in flow connection with the suction chamber (50), and with a valve unit (102) by which a free cross-sectional area of the return line (92) is changeable, **characterized in that** the high-pressure pump (16) comprises the return line (92) and the valve unit (102), and **in that** the high-pressure cleaning apparatus (10) comprises a drive unit (116) associated with the valve unit (102), a control unit (76) coupled to the drive unit (116) and a pressure sensor (138) coupled to the control unit (76) by which a liquid pressure is detectable on the pressure side of the pump chamber (52), and wherein the control unit (76) regulates the drive unit (116) for actuating the valve unit (102), for controlling the liquid pressure depending on the signal of the pressure sensor (138) to a predetermined or predeterminable liquid pressure by changing of the free cross-sectional area of the return line (92).

2. High-pressure cleaning apparatus in accordance with claim 1, **characterized in that** the liquid pressure is detectable at or in the pressure chamber (56).

3. High-pressure cleaning apparatus in accordance with claim 1 or 2, **characterized in that** at least one of the following applies:
- the liquid pressure is predeterminable for the control unit (76) in steps and/or continuously;
- the free cross-sectional area of the return line (92) is changeable in steps or continuously for controlling the liquid pressure.

4. High-pressure cleaning apparatus in accordance with any one of the preceding claims, **characterized in that** the valve unit (102) comprises a valve body (106) with which the drive unit (116) is coupled and a valve seat (110) with which the valve body (106) is in sealing or substantially sealing contact when in a closed position and from which the valve body (106) is unseatable to at least one open position for changing the free cross-sectional area of the return line (92), in particular that the valve body (106) is configured as a valve pin (108) which is movable, and in particular displaceable, in a longitudinal direction in the return line (92).

5. High-pressure cleaning apparatus in accordance with claim 4, **characterized in that** in the at least one open position, the change in the free cross-sectional area at the valve seat (110) per length of travel of the valve body (106) relative to the valve seat (110) is dependent on the position of the valve body (106) relative to the valve seat (110) wherein the valve pin (108) in particular comprises a taper in at least a section thereof and the taper increases with increasing distance from a valve body sealing section (112) of the valve pin (108) which is in contact against the valve seat (110) when in the closed position.

6. High-pressure cleaning apparatus in accordance with claim 4 or 5, **characterized in that** downstream of the valve seat (110), the return line (92) is oriented transversely to the longitudinal direction of the valve body (106).

7. High-pressure cleaning apparatus in accordance with any one of the preceding claims, **characterized in that** the drive unit (116) is an electric, a mechanical, a hydraulic and/or a pneumatic drive unit (116), preferably **in that** the drive unit (116) comprises a spindle drive.

8. High-pressure cleaning apparatus in accordance with any one of the preceding claims, **characterized in that** the high-pressure pump (16) comprises an injector (90) arranged in the pressure chamber (56) and a supply line (86), opening thereinto, for a cleaning chemical that is to be admixed to the liquid, and **in that** the pressure is detectable in the supply line (86) by the pressure sensor (138), in particular that a liquid pressure below a predetermined or predeterminable threshold pressure is detectable by the pressure sensor (138).

9. High-pressure cleaning apparatus in accordance with claim 8, **characterized in that** the high-pressure pump (16) is transferable, with a liquid pressure being below a predetermined or predeterminable threshold pressure, from a control mode in which the liquid pressure is controlled to a non-control mode in which the liquid pressure is not controlled.

10. High-pressure cleaning apparatus in accordance with claim 9, **characterized in that** a position of the valve unit (102) is regulatable by the control unit (76) for changing the free cross-sectional area in the non-control mode depending on a predetermination supplied to the control unit (76), in particular that the valve unit (102) is adjustable in steps and/or continuously.

11. High-pressure cleaning apparatus in accordance with any one of the preceding claims, **characterized in that** the high-pressure cleaning apparatus (10) comprises an input unit (28) which is coupled to the control unit and via which a liquid pressure is predeterminable for the control unit (76) by an operator, in particular that the high-pressure cleaning apparatus (10) comprises a display unit (34) at which information associated with the predetermined liquid pressure is displayable to the operator.

12. High-pressure cleaning apparatus in accordance with any one of the preceding claims, **characterized in that** the high-pressure cleaning apparatus (10) comprises an admixing device (80) for admixing a cleaning chemical, which admixing device (80) comprises a receptacle (82) for a container (84) holding the cleaning chemical, an injector (90) arranged in the pressure chamber (56) and a supply line (86) from the receptacle to the injector (90).

13. High-pressure cleaning apparatus in accordance with any one of the preceding claims, **characterized in that** the high-pressure cleaning apparatus (10) comprises an operating unit (24) which is in flow connection or can be brought into flow connection with the pressure chamber (56) via a high-pressure line (22) and to which is connectable or on which is arranged at least one discharge unit (36, 38, 41, 43) for pressurized liquid, and **in that** the operating unit (24) comprises the input unit (28) and/or the display unit.

14. High-pressure cleaning apparatus in accordance with claim 13, **characterized in that** a high-pressure nozzle (39, 44) is provided as a first discharge unit (38, 43) and a low-pressure cleaning agent nozzle (37, 42) is provided as a second discharge unit (36, 41), these being selectively connectable to the operating unit (24), and/or **in that** the high-pressure cleaning apparatus (10) comprises a discharge device (40) that is arranged on the operating unit (24) or is connectable thereto and which comprises a high-pressure nozzle (39, 44) and a low-pressure cleaning agent nozzle (37, 42) which can be selectively brought into fluid connection with the high-pressure line (22).

15. High-pressure cleaning apparatus in accordance with claim 14, **characterized in that**, when the low-pressure cleaning agent nozzle (37, 42) is connected or selected in use of the high-pressure cleaning apparatus (10), a drop in the liquid pressure below a predetermined or predeterminable threshold pressure is detectable and **in that** a corresponding indication is providable to the operator at an indicating unit of the high-pressure cleaning apparatus (10), the indication comprises the information that the high-pressure cleaning apparatus (10), in particular the high-pressure pump (16), is assuming a cleaning agent mode, wherein the cleaning agent mode, the high-pressure pump (16) assumes a non-control mode in which the liquid pressure is not controlled.

16. High-pressure cleaning apparatus in accordance with claim 15, **characterized in that**, when in the cleaning agent mode, a position of the valve unit (102) is regulatable by the operator via the input unit (28) for changing the free cross-sectional area, in particular **in that** the high-pressure cleaning apparatus (10) comprises an admixing device (80) for admixing a cleaning chemical whose mixing ratio with the pressurized liquid is regulatable depending on the position of the valve unit (102).

17. High-pressure cleaning apparatus in accordance with claim 16, **characterized in that** the input unit (28) comprises input elements (30, 32) by which, in the presence of the cleaning agent mode, the position of the valve unit (102) is predeterminable and by which, in the absence of the cleaning agent mode, the liquid pressure is predeterminable.

## Revendications

1. Appareil de nettoyage haute pression (10) avec une pompe haute pression (16), qui comprend une chambre d'aspiration (50), au moins une chambre de pompe (52) montée en aval de celle-ci, dans laquelle un liquide est mis sous pression, et une chambre de pression (56) montée en aval de la chambre de pompe (52), avec une conduite de retour (92), par l'intermédiaire de laquelle la chambre de pression (56) est en liaison d'écoulement avec la chambre d'aspiration (50), et avec une unité soupape (102), avec laquelle une surface de section transversale libre de la conduite de retour (92) peut être modifiée, **caractérisé en ce que** la pompe haute pression (16) comprend la conduite de retour (92) et l'unité soupape (102), et **caractérisé en ce que** l'appareil de nettoyage haute pression (10) comprend une unité d'entraînement (116) associée à l'unité soupape (102), une unité de commande (76) couplée à l'unité d'entraînement (116) et un capteur de pression (138) couplé à l'unité de commande (76), avec lequel une pression de liquide côté pression de la chambre de pompe (52) peut être détectée, et dans lequel l'unité de commande (76) commande l'unité d'entraînement (116) pour l'actionnement de l'unité soupape (102), pour la régulation de la pression de liquide en fonction du signal du capteur de pression (138) à une pression de liquide prédéfinie ou pouvant être prédéfinie sous l'effet d'une modification de la section transversale libre de la conduite de retour (92).

2. Appareil de nettoyage haute pression selon la revendication 1, **caractérisé en ce que** la pression de liquide sur ou dans la chambre de pression (56) peut être détectée.

3. Appareil de nettoyage haute pression selon la revendication 1 ou 2, **caractérisé en ce qu'**au moins un de ce qui suit s'applique :
- la pression de liquide peut être spécifiée progressivement ou de manière continue à l'unité de commande (76) ;
- la section transversale libre de la conduite de retour (92) peut être modifiée progressivement ou de manière continue pour la régulation de la pression de liquide.

4. Appareil de nettoyage haute pression selon l'une quelconque des revendications précédentes, **caractérisé en ce que** l'unité soupape (102) comprend un corps de soupape (106), auquel l'unité d'entraînement (116) est accouplée, et un siège de soupape (110), sur lequel le corps de soupape (106) s'applique de manière étanche ou sensiblement étanche dans une position fermée et duquel le corps de soupape (106) peut être soulevé dans au moins une position ouverte pour la modification de la section transversale libre de la conduite de retour (92), en particulier que le corps de soupape (106) est réalisé sous la forme d'une tige de soupape (108), qui est mobile et en particulier peut coulisser dans la direction longitudinale dans la conduite de retour (92).

5. Appareil de nettoyage haute pression selon la revendication 4, **caractérisé en ce que** dans l'au moins une position ouverte, la modification de la section transversale libre sur le siège de soupape (110) par course de déplacement du corps de soupape (106) par rapport au siège de soupape (110) dépend de la position du corps de soupape (106) par rapport au siège de soupape (110), dans lequel la tige de soupape (108) présente en particulier, au moins sur certaines parties, un amincissement et l'amincissement augmente à mesure qu'augmente la distance par rapport à une partie étanche de corps de soupape (112) de la tige de soupape (108) s'appliquant sur le siège de soupape (110) dans la position fermée.

6. Appareil de nettoyage haute pression selon la revendication 4 ou 5, **caractérisé en ce que** la conduite de retour (92) est orientée en aval du siège de soupape (110) transversalement par rapport à la direction longitudinale du corps de soupape (106).

7. Appareil de nettoyage haute pression selon l'une quelconque des revendications précédentes, **caractérisé en ce que** l'unité d'entraînement (116) comprend une unité d'entraînement (116) électrique, mécanique, hydraulique et/ou pneumatique, de préférence que l'unité d'entraînement (116) comprend un entraînement à broche.

8. Appareil de nettoyage haute pression selon l'une quelconque des revendications précédentes, **caractérisé en ce que** la pompe haute pression (16) comprend un injecteur (90) disposé dans la chambre de pression (56) et une conduite d'amenée (86) débouchant dans celle-ci pour un produit chimique de nettoyage à ajouter au liquide, et que la pression dans la conduite d'amenée (86) peut être détectée avec le capteur de pression (138), en particulier qu'une pression de liquide au-dessous d'une pression de valeur seuil prédéfinie ou pouvant être prédéfinie peut être détectée avec le capteur de pression (138).

9. Appareil de nettoyage haute pression selon la revendication 8, **caractérisé en ce que** la pompe haute pression (16), pour une pression de liquide au-dessous de la pression de valeur seuil prédéfinie ou pouvant être prédéfinie, est amenée d'un mode de régulation, dans lequel la régulation de la pression de liquide s'effectue, dans un mode de non-régulation, dans lequel aucune régulation de la pression de liquide ne s'effectue.

10. Appareil de nettoyage haute pression selon la revendication 9, **caractérisé en ce qu'**une position de l'unité soupape (102) peut être commandée par l'unité de commande (76) pour la modification de la section transversale libre dans le mode de non-régulation en fonction d'une consigne amenée à l'unité de commande (76), en particulier que l'unité soupape (102) peut être déplacée progressivement et/ou de manière continue.

11. Appareil de nettoyage haute pression selon l'une quelconque des revendications précédentes, **caractérisé en ce que** l'appareil de nettoyage haute pression (10) comprend une unité d'entrée (28) couplée à l'unité de commande, par l'intermédiaire de laquelle une pression de liquide peut être spécifiée par un opérateur à l'unité de commande (76), en particulier que l'appareil de nettoyage haute pression (10) comprend une unité d'affichage (34), sur laquelle l'opérateur peut afficher une information associée à la pression de liquide prédéfinie.

12. Appareil de nettoyage haute pression selon l'une quelconque des revendications précédentes, **caractérisé en ce que** l'appareil de nettoyage haute pression (10) comprend un dispositif d'ajout (80) pour l'ajout d'un produit chimique de nettoyage, lequel dispositif d'ajout (80) présente un logement (82) pour un contenant (84) avec le produit chimique de nettoyage, un injecteur (90) disposé dans la chambre de pression (56) et une conduite d'amenée (86) à partir du logement vers l'injecteur (90).

13. Appareil de nettoyage haute pression selon l'une quelconque des revendications précédentes, **caractérisé en ce que** l'appareil de nettoyage haute pression (10) comprend une unité de commande utilisateur (24), qui est ou peut être amenée en liaison d'écoulement avec la chambre de pression (56) par l'intermédiaire d'une conduite haute pression (22) et à laquelle au moins une unité de distribution (36, 38, 41, 43) pour un liquide sous pression peut être raccordée ou est disposée sur celle-ci et que l'unité de commande utilisateur (24) comprend l'unité d'entrée (28) et/ou l'unité d'affichage.

14. Appareil de nettoyage haute pression selon la revendication 13, **caractérisé en ce qu'**une buse haute pression (39, 44) est prévue en tant que première unité de distribution (38, 43) et une buse de produit de nettoyage basse pression (37, 42) en tant que deuxième unité de distribution (36, 41), qui peuvent être raccordées sélectivement à l'unité de commande utilisateur (24) et/ou que l'appareil de nettoyage haute pression (10) présente un dispositif de distribution (40), qui est disposé sur l'unité de commande utilisateur (24) ou peut être raccordé à celle-ci et qui présente une buse haute pression (39, 44) et une buse de produit de nettoyage basse pression (37, 42), qui peuvent être amenées sélectivement en liaison fluidique avec la conduite haute pression (22).

15. Appareil de nettoyage haute pression selon la revendication 14, **caractérisé en ce que** lors du raccordement ou de la sélection de la buse de produit de nettoyage basse pression (37, 42) lorsque l'appareil de nettoyage haute pression (10) est en fonctionnement, une chute de la pression de liquide au-dessous d'une pression de valeur seuil prédéfinie ou pouvant être prédéfinie peut être détectée et qu'une indication concernant celle-ci peut être fournie à l'opérateur sur une unité d'indication de l'appareil de nettoyage haute pression (10), l'indication présentant l'information que l'appareil de nettoyage haute pression (10), en particulier la pompe haute pression (16), occupe un mode produit de nettoyage, dans lequel la pompe haute pression (16) occupe dans le mode produit de nettoyage un mode non-régulation, dans lequel aucune régulation de la pression de liquide ne s'effectue.

16. Appareil de nettoyage haute pression selon la revendication 15, **caractérisé en ce que** dans le mode produit de nettoyage, une position de l'unité soupape (102) peut être commandée par l'opérateur par l'intermédiaire de l'unité d'entrée (28) pour la modification de la section transversale libre, en particulier que l'appareil de nettoyage haute pression (10) comprend un dispositif d'ajout (80) pour l'ajout d'un produit chimique de nettoyage, dont le rapport de mélange avec le liquide sous pression peut être commandé en fonction de la position de l'unité soupape (102).

17. Appareil de nettoyage haute pression selon la revendication 16, **caractérisé en ce que** l'unité d'entrée (28) comprend des éléments d'entrée (30, 32), avec lesquels en présence du mode produit de nettoyage la position de l'unité soupape (102) peut être prédéfinie, et en l'absence du mode produit de nettoyage, la pression de liquide peut être prédéfinie.
